# EUROPÄISCHE PATENTSCHRIFT

(11) **EP 4 356 029 B1**
(45) Veröffentlichungstag und Bekanntmachung des Hinweises auf die Patenterteilung: **30.07.2025**
(21) Anmeldenummer: 21733923.3
(22) Anmeldetag: 14.06.2021
(51) Int. Cl.: F16K 11/085, F01P 7/14, B60H 1/00

(54) **MEHRWEGEVENTIL FÜR EIN ELEKTROFAHRZEUG, THERMOMANAGEMENTSYSTEM UND VERFAHREN ZUM BETRIEB EINES THERMOMANAGEMENTSYSTEMS**
MULTIWAY VALVE FOR AN ELECTRIC VEHICLE, THERMAL MANAGEMENT SYSTEM, AND METHOD FOR OPERATING A THERMAL MANAGEMENT SYSTEM
VANNE À VOIES MULTIPLES POUR UN VÉHICULE ÉLECTRIQUE, SYSTÈME DE GESTION THERMIQUE ET PROCÉDÉ DE FONCTIONNEMENT D'UN SYSTÈME DE GESTION THERMIQUE

(43) Veröffentlichungstag der Anmeldung: 24.04.2024
(73) Patentinhaber: HELLA GmbH & Co. KGaA, 59552 Lippstadt (DE)
(72) Erfinder: TIEMEYER, Sebastian, 44143 Dortmund (DE)
(74) Vertreter: Behr-Wenning, Gregor
(86) Internationale Anmeldenummer: PCT/EP2021/065883
(87) Internationale Veröffentlichungsnummer: WO 2022/262929

(56) Entgegenhaltungen:
- CN-A- 110 843 465
- US-A1- 2006 118 066

## Beschreibung

Die vorliegende Erfindung bezieht sich auf ein Mehrwegeventil für ein Elektrofahrzeug der im Oberbegriff des Anspruchs 1 genannten Art und ein Thermomanagementsystem für ein Elektrofahrzeug.

Derartige Mehrwegeventile und Thermomanagementsysteme sind aus dem Stand der Technik in zahlreichen Ausführungsvarianten bereits bekannt.

Mehrwegeventile sind in der Technik in voneinander verschiedenen Ausführungsformen weit verbreitet und dienen zur Steuerung von komplexen Fluidströmen in einer Vielzahl von Anwendungsfällen. Mittels eines Mehrwegeventils ist es möglich, eine Kombination von einer Mehrzahl von Einwegventilen zu ersetzen. Beispielsweise finden Mehrwegeventile Anwendung in der Ansteuerung von komplexen Fluidsystemen mit Fluidkreisläufen bei Fahrzeugen. Auch neuere Kraftfahrzeugkonzepte für Landfahrzeuge, wie beispielsweise Hybrid- oder Elektroautos, verfügen über derart komplexe Fluidsysteme mit Fluidkreisläufen. Bei den Fluidkreisläufen kann es sich zum Beispiel um Kühlkreisläufe und/oder Heizkreisläufe handeln, wobei derselbe Fluidkreislauf gleichzeitig als Kühlkreislauf und als Heizkreislauf ausgebildet sein kann. Je nach Betriebsmodus kann es erforderlich sein, Fluidkreisläufe eines derartigen Fluidsystems zu schließen oder zu öffnen, miteinander zu verbinden oder voneinander zu trennen. Bei der Verwendung von üblichen Mehrwegeventilen sind dafür dann eine Mehrzahl von Mehrwegeventilen, beispielsweise von 3/2- oder 4/2-Wege-Ventile, erforderlich.

Zum Beispiel sind aus der CN 110 843 465 A ein Mehrkanal-Kühlventil und ein Kühlsystem eines Elektroautos bekannt. Das Mehrkanal-Kühlventil besteht aus einem Ventilkörper, der mit einer oberen und einer unteren Schicht versehen ist, und einer an den Umfang des Ventilkörpers angepassten Schale. Die obere Schicht des Ventilkörpers ist mit einer Vielzahl von oberen Kanälen versehen, die untere Schicht des Ventilkörpers ist mit einer Vielzahl von unteren Kanälen versehen, die oberen Kanäle und die unteren Kanäle sind versetzt angeordnet, der Ventilkörper und ein Aktor des Elektroautos sind fest miteinander verbunden und aufeinander abgestimmt. Der Aktor, der sich dreht, kann den Ventilkörper antreiben, um ihn synchron zu drehen; eine Vielzahl von Öffnungen, die mit dem Ventilkörper in Verbindung stehen, sind auf der Schale in einem Abstand angeordnet, und die Höhen der Öffnungen sind größer oder gleich den Abständen von den oberen Flächen der oberen Kanäle zu den unteren Flächen der unteren Kanäle des Ventilkörpers. Das Mehrkanal-Kühlventil weist eine einfache Struktur auf, wodurch der Anschluss von kreisförmigen Kühlmodulen im Elektroauto vereinfacht wird, die Leistung des Kühlsystems voll ausgeschöpft werden kann und die Lebensdauer des Elektroautos verbessert wird.

Ferner wird auf die US 2006 118 066 A1 hingewiesen, die ein Steuerventil für ein Flüssigkeitszirkulationssystem betrifft. Das Steuerventil besteht aus einem Körper mit einer zylindrischen Seitenwand, die ein zylindrisches Gehäuse begrenzt. Das Steuerventil umfasst außerdem Rohre, durch die die Flüssigkeit in den oben genannten Körper eintritt und ihn verlässt. Ein Drehverstellelement ist um eine Achse drehbar im Körper angebracht und kann verschiedene Positionen einnehmen, um die Zirkulation der Flüssigkeit zwischen den Rohren zu steuern. Sämtliche dieser Rohre verlaufen durch die zylindrische Seitenwand des Körpers.

Hier setzt die vorliegende Erfindung an.

Der vorliegenden Erfindung liegt die Aufgabe zugrunde, ein Mehrwegeventil für ein Elektrofahrzeug und ein Thermomanagementsystem zu verbessern.

Diese Aufgabe wird durch ein Mehrwegeventil für ein Elektrofahrzeug mit den Merkmalen des Anspruchs 1 gelöst, das dadurch gekennzeichnet ist, dass mindestens zwei Paarungen der Gehäuseöffnungen und der dazu korrespondierenden Dichtungsöffnungen derart übereinander angeordnet sind, dass die eine der vorgenannten Paarungen der ersten Ebene mit den ersten Verbindungskanälen und die andere der vorgenannten Paarungen der zweiten Ebene mit den zweiten Verbindungskanälen strömungsleitend zugeordnet ist. Ferner wird dieses Problem durch ein Thermomanagementsystem mit den Merkmalen des Anspruchs 9 gelöst. Der Begriff "Elektrofahrzeug" schließt hier auch sogenannte Hybridfahrzeuge mit ein, also Fahrzeuge, die sowohl über einen Elektroantrieb wie auch über eine andere Antriebsart, beispielsweise einen Verbrennungsmotor oder eine Brennstoffzelle, verfügen. Die Unteransprüche betreffen vorteilhafte Weiterbildungen der Erfindung.

Ein wesentlicher Vorteil der Erfindung liegt insbesondere darin, dass ein Mehrwegeventil für ein Elektrofahrzeug und ein Thermomanagementsystemverbessert sind. Mittels des erfindungsgemäßen Mehrwegeventils und des erfindungsgemäßen Thermomanagementsystems ist es möglich, eine Mehrzahl von externen Strömungskanälen eines Fluidsystems mit beispielsweise einer Mehrzahl von Fluidkreisläufen auf konstruktiv und schaltungstechnisch einfache Art und Weise anzusteuern. Mittels der Erfindung ist es somit möglich, eine Mehrzahl von üblichen Mehrwegeventilen einzusparen und durch lediglich ein einziges erfindungsgemäßes Mehrwegeventil zu ersetzen. Ferner ist es möglich, die Anzahl der Paarungen bei gleichbleibendem Platzbedarf zu erhöhen. Entsprechend sind der Montageaufwand und die Kosten sowie der dafür erforderliche Bauraum reduziert.

Grundsätzlich ist das erfindungsgemäße Mehrwegeventil für ein Elektrofahrzeug nach Art, Funktionsweise, Material, Dimensionierung, Form und Anordnung in weiten geeigneten Grenzen frei wählbar. Beispielsweise ist es möglich, die Gehäuseöffnungen und die dazu korrespondierenden Dichtungsöffnungen und/oder die lichten Querschnitte der Verbindungskanäle, beispielsweise zur Reduzierung von Druckverlusten, im Wesentlichen rechteckig auszubilden. Im Unterschied zu kreisrunden Öffnungen und lichten Querschnitten lassen sich im Wesentlichen rechteckige Öffnungen und lichte Querschnitte viel platzsparender anordnen, so dass beispielsweise im Vergleich zu kreisrunden Öffnungen und lichten Querschnitten größere Strömungsquerschnitte möglich sind. Die Formulierung "im Wesentlichen" meint dabei, dass die Ecken der Gehäuseöffnungen, Dichtungsöffnungen und/oder lichten Querschnitte der Verbindungskanäle verrundet sein können.

Eine vorteilhafte Weiterbildung des erfindungsgemäßen Mehrwegeventils sieht vor, dass sich eine Mehrzahl der Paarungen der Gehäuseöffnungen und der dazu korrespondierenden Dichtungsöffnungen derart über die erste und die zweite Ebene erstrecken, dass diese Paarungen der ersten Ebene mit den ersten Verbindungskanälen und der zweiten Ebene mit den zweiten Verbindungskanälen strömungsleitend zugeordnet sind und jeweils in Abhängigkeit der Drehlage des Ventilkörpers mit einem der ersten und/oder einem der zweiten Verbindungskanäle im Wesentlichen ohne Querschnittsreduzierung, bezogen auf eine Strömung von dem jeweiligen Verbindungskanal in Richtung der vorgenannten Paarungen, strömungsleitend verbindbar ist. Auf diese Weise ist es auf konstruktiv und fertigungstechnisch einfache Art möglich, diese Paarungen sowohl der ersten Ebene des Ventilkörpers mit den ersten Verbindungskanälen wie auch der zweiten Ebene des Ventilkörpers mit den zweiten Verbindungskanälen strömungsleitend zuzuordnen.

Eine besonders vorteilhafte Weiterbildung des erfindungsgemäßen Mehrwegeventils sieht vor, dass der Ventilkörper zur strömungsleitenden Verbindung von mindestens zwei der Gehäuseöffnungen zusätzlich mindestens einen dritten von den ersten und zweiten Verbindungskanälen strömungstechnisch getrennten Verbindungskanal aufweist, wobei sich der dritte Verbindungskanal über die erste und die zweite Ebene erstreckt, bevorzugt, dass der dritte Verbindungskanal als ein zentraler Kanal ausgebildet ist. Auf diese Weise ist es auf konstruktiv und fertigungstechnisch besonders einfache Art möglich, mittels des Ventilkörpers strömungsleitende Verbindungen zwischen der ersten Ebene und der zweiten Ebene zu realisieren. Die bevorzugte Ausführungsform dieser Weiterbildung weist den weiteren Vorteil auf, dass der dritte Verbindungskanal auf konstruktiv und fertigungstechnisch einfache Weise realisierbar ist. Beispielsweise ist die vorliegende Weiterbildung wesentlich, um Paarungen miteinander strömungsleitend zu verbinden, von denen eine Paarung strömungsleitend lediglich der ersten Ebene und die andere Paarung strömungsleitend lediglich der zweiten Ebene zugeordnet ist.

Entsprechend sieht eine vorteilhafte Weiterbildung der vorgenannten Weiterbildung vor, dass die zwei übereinander angeordneten Paarungen der Gehäuseöffnungen und der dazu korrespondierenden Dichtungsöffnungen und der dritte Verbindungskanal derart aufeinander abgestimmt ausgebildet sind, dass der dritte Verbindungskanal mit mindestens einer der beiden Paarungen strömungsleitend verbindbar ist.

Eine andere vorteilhafte Weiterbildung des erfindungsgemäßen Mehrwegeventils sieht vor, dass die Paarungen der Gehäuseöffnungen und der dazu korrespondierenden Dichtungsöffnungen derart symmetrisch um die Drehachse des Ventilkörpers angeordnet sind, dass Flächenschwerpunkte der vorgenannten Paarungen bei 0°, bei 60°, bei 120°, bei 180°, bei 240° und bei 300° positioniert sind. Hierdurch ist eine besonders vielfältige Möglichkeit der strömungsleitenden Verbindung von voneinander verschiedenen Paarungen geschaffen. Die Winkelangaben beziehen sich dabei auf eine Ebene senkrecht zu der Drehachse.

Eine weitere vorteilhafte Weiterbildung des erfindungsgemäßen Mehrwegeventils sieht vor, dass eine Ausdehnung der jeweiligen Paarung der Gehäuseöffnungen und der dazu korrespondierenden Dichtungsöffnungen, bezogen auf die Drehachse des Ventilkörpers, jeweils einem Winkel von 30° entspricht. Auf diese Weise ist eine effiziente Ausnutzung des vorhandenen Bauraums bei gleichzeitiger Optimierung der vorgenannten Öffnungen, nämlich unter den technischen Gegebenheiten möglichst große Öffnungen, erzielt. Die Winkelangaben beziehen sich dabei wiederum auf eine Ebene senkrecht zu der Drehachse.

Eine andere vorteilhafte Weiterbildung des erfindungsgemäßen Mehrwegeventils sieht vor, dass die ersten und die zweiten Verbindungskanäle (46, 48, 52, 54; 46, 48, 52, 54, 55) Ausdehnungen aufweisen, die, bezogen auf die Drehachse (38) des Ventilkörpers (40) und einer Kontaktfläche des Ventilkörpers (40) mit der Dichtung (42), den folgenden Winkelgruppen a und b entsprechen: a) jeweils 90°; b) teilweise 120°, teilweise 90°, bevorzugt, dass der mindestens eine dritte Verbindungskanal (56) eine Ausdehnung aufweist, die, bezogen auf die Drehachse (38) des Ventilkörpers (40) und der Kontaktfläche des Ventilkörpers (40) mit der Dichtung (42), einem Winkel von 30° entspricht. Die Winkelangaben beziehen sich dabei wiederum auf eine Ebene senkrecht zu der Drehachse. Hierdurch ist, analog zu den Gehäuseöffnungen und Dichtungsöffnungen der vorgenannten Weiterbildung, eine effiziente Ausnutzung des vorhandenen Bauraums bei gleichzeitiger Optimierung der vorgenannten lichten Querschnitte der Verbindungskanäle, nämlich unter den technischen Gegebenheiten möglichst große lichte Querschnitte, erzielt. Aufgrund der vorliegenden Weiterbildung ergeben sich verschiedene Variationsmöglichkeiten. Beispielsweise können die Ausdehnungen der ersten Verbindungkanäle der ersten Ebene nach der Winkelgruppe a ausgebildet sein, während die Ausdehnungen der zweiten Verbindungkanäle der zweiten Ebene nach der Winkelgruppe b ausgebildet sein können. Denkbar ist selbstverständlich auch der umgekehrte Fall. Eine weitere Flexibilität in der Konstruktion des erfindungsgemäßen Mehrwegeventils ergibt sich ferner durch die Aufteilung der Einzelwinkel der Winkelgruppen auf die jeweilige Anzahl der ersten und/oder zweiten Verbindungskanäle bei dem einzelnen Ausführungsbeispiel. Darüber hinaus können die Ausdehnungen der ersten und zweiten Verbindungskanäle voneinander verschiedenen Winkelgruppen zugeordnet sein.

Eine weitere besonders vorteilhafte Weiterbildung des erfindungsgemäßen Mehrwegeventils sieht vor, dass die Paarungen der Gehäuseöffnungen und der dazu korrespondierenden Dichtungsöffnungen und der Ventilkörper mit den Verbindungskanälen derart aufeinander abgestimmt ausgebildet sind, dass ein durch eine der Gehäuseöffnungen einströmendes Fluid mittels des Ventilkörpers in Abhängigkeit der Drehlage des Ventilkörpers auf mindestens zwei andere der Gehäuseöffnungen aufteilbar ist. Auf diese Weise ist das erfindungsgemäße Mehrwegeventil noch besser auf die jeweiligen Erfordernisse des Einzelfalls anpassbar.

Grundsätzlich ist das erfindungsgemäße Thermomanagementsystem nach Art, Funktionsweise, Material und Dimensionierung ebenfalls in weiten geeigneten Grenzen frei wählbar.

Eine vorteilhafte Weiterbildung des erfindungsgemäßen Thermomanagementsystems sieht vor, dass das Mehrwegeventil insgesamt sieben Paarungen der Gehäuseöffnungen und der dazu korrespondierenden Dichtungsöffnungen aufweist, wobei der Antriebskreislauf mit drei der vorgenannten Paarungen und der Batteriekreislauf und der Klimatisierungskreislauf mit jeweils zwei der vorgenannten Paarungen strömungsleitend verbunden ist. Hierdurch ist ein Thermomanagementsystem ermöglicht, dass insbesondere auf die Erfordernisse bei einem Elektrofahrzeug angepasst ausgebildet ist.

Anhand der beigefügten, grob schematischen Zeichnung wird die Erfindung nachfolgend näher erläutert. Dabei zeigt:
- Fig. 1: ein Ausführungsbeispiel des erfindungsgemäßen Thermomanagementsystems in einem Blockschaltbild,
- Fig. 2a: das erfindungsgemäße Mehrwegeventil des Ausführungsbeispiels in einer teilweisen Explosionsdarstellung,
- Fig. 2b: das Mehrwegeventil des Ausführungsbeispiels in einem teilweisen, perspektivischen Querschnitt mit Blick auf die erste Ebene des Ventilkörpers,
- Fig. 2c: das Mehrwegeventil des Ausführungsbeispiels in einem teilweisen, perspektivischen Querschnitt mit Blick auf die zweite Ebene des Ventilkörpers,
- Fig. 3a: die zwei Ebenen des Mehrwegeventils in analoger Darstellung zu den Fig. 2b und 2c, mit dem Ventilkörper in einer ersten Drehlage,
- Fig. 3b: die zu der Fig. 3a korrespondierende Kontaktfläche zwischen dem Ventilkörper und dem Gehäuse mit der Dichtung in einer Abwicklungsdarstellung,
- Fig. 3c: das Thermomanagementsystem in einer zu der Fig. 1 analogen Darstellung, in einem zu der ersten Drehlage des Ventilkörpers korrespondierenden Betriebszustand,
- Fig. 4a: die zwei Ebenen des Mehrwegeventils in analoger Darstellung zu den Fig. 2b und 2c, mit dem Ventilkörper in einer zweiten Drehlage,
- Fig. 4b: die zu der Fig. 4a korrespondierende Kontaktfläche zwischen dem Ventilkörper und dem Gehäuse mit der Dichtung in einer Abwicklungsdarstellung,
- Fig. 4c: das Thermomanagementsystem in einer zu der Fig. 1 analogen Darstellung, in einem zu der zweiten Drehlage des Ventilkörpers korrespondierenden Betriebszustand,
- Fig. 5a: die zwei Ebenen des Mehrwegeventils in analoger Darstellung zu den Fig. 2b und 2c, mit dem Ventilkörper in einer dritten Drehlage,
- Fig. 5b: die zu der Fig. 5a korrespondierende Kontaktfläche zwischen dem Ventilkörper und dem Gehäuse mit der Dichtung in einer Abwicklungsdarstellung,
- Fig. 5c: das Thermomanagementsystem in einer zu der Fig. 1 analogen Darstellung, in einem zu der dritten Drehlage des Ventilkörpers korrespondierenden Betriebszustand,
- Fig. 6a: die zwei Ebenen des Mehrwegeventils in analoger Darstellung zu den Fig. 2b und 2c, mit dem Ventilkörper in einer vierten Drehlage,
- Fig. 6b: die zu der Fig. 6a korrespondierende Kontaktfläche zwischen dem Ventilkörper und dem Gehäuse mit der Dichtung in einer Abwicklungsdarstellung,
- Fig. 6c: das Thermomanagementsystem in einer zu der Fig. 1 analogen Darstellung, in einem zu der vierten Drehlage des Ventilkörpers korrespondierenden Betriebszustand,
- Fig. 7a: die zwei Ebenen des Mehrwegeventils in analoger Darstellung zu den Fig. 2b und 2c, mit dem Ventilkörper in einer fünften Drehlage,
- Fig. 7b: die zu der Fig. 7a korrespondierende Kontaktfläche zwischen dem Ventilkörper und dem Gehäuse mit der Dichtung in einer Abwicklungsdarstellung,
- Fig. 7c: das Thermomanagementsystem in einer zu der Fig. 1 analogen Darstellung, in einem zu der fünften Drehlage des Ventilkörpers korrespondierenden Betriebszustand,
- Fig. 8a: die zwei Ebenen des Mehrwegeventils in analoger Darstellung zu den Fig. 2b und 2c, mit dem Ventilkörper in einer sechsten Drehlage,
- Fig. 8b: die zu der Fig. 8a korrespondierende Kontaktfläche zwischen dem Ventilkörper und dem Gehäuse mit der Dichtung in einer Abwicklungsdarstellung,
- Fig. 8c: das Thermomanagementsystem in einer zu der Fig. 1 analogen Darstellung, in einem zu der sechsten Drehlage des Ventilkörpers korrespondierenden Betriebszustand,
- Fig. 9a: die zwei Ebenen des Mehrwegeventils in analoger Darstellung zu den Fig. 2b und 2c, mit dem Ventilkörper in einer siebten Drehlage,
- Fig. 9b: die zu der Fig. 9a korrespondierende Kontaktfläche zwischen dem Ventilkörper und dem Gehäuse mit der Dichtung in einer Abwicklungsdarstellung,
- Fig. 9c: das Thermomanagementsystem in einer zu der Fig. 1 analogen Darstellung, in einem zu der siebten Drehlage des Ventilkörpers korrespondierenden Betriebszustand,
- Fig. 10a: die zwei Ebenen des Mehrwegeventils in analoger Darstellung zu den Fig. 2b und 2c, mit dem Ventilkörper in einer achten Drehlage,
- Fig. 10b: die zu der Fig. 10a korrespondierende Kontaktfläche zwischen dem Ventilkörper und dem Gehäuse mit der Dichtung in einer Abwicklungsdarstellung,
- Fig. 10c: das Thermomanagementsystem in einer zu der Fig. 1 analogen Darstellung, in einem zu der achten Drehlage des Ventilkörpers korrespondierenden Betriebszustand,
- Fig. 11a: die zwei Ebenen des Mehrwegeventils in analoger Darstellung zu den Fig. 2b und 2c, mit dem Ventilkörper in einer neunten Drehlage,
- Fig. 11b: die zu der Fig. 11a korrespondierende Kontaktfläche zwischen dem Ventilkörper und dem Gehäuse mit der Dichtung in einer Abwicklungsdarstellung,
- Fig. 11c: das Thermomanagementsystem in einer zu der Fig. 1 analogen Darstellung, in einem zu der neunten Drehlage des Ventilkörpers korrespondierenden Betriebszustand,
- Fig. 12a: die zwei Ebenen des Mehrwegeventils in analoger Darstellung zu den Fig. 2b und 2c, mit dem Ventilkörper in einer zehnten Drehlage,
- Fig. 12b: die zu der Fig. 12a korrespondierende Kontaktfläche zwischen dem Ventilkörper und dem Gehäuse mit der Dichtung in einer Abwicklungsdarstellung,
- Fig. 12c: das Thermomanagementsystem in einer zu der Fig. 1 analogen Darstellung, in einem zu der zehnten Drehlage des Ventilkörpers korrespondierenden Betriebszustand,
- Fig. 13a: die zwei Ebenen des Mehrwegeventils in analoger Darstellung zu den Fig. 2b und 2c, mit dem Ventilkörper in einer elften Drehlage,
- Fig. 13b: die zu der Fig. 13a korrespondierende Kontaktfläche zwischen dem Ventilkörper und dem Gehäuse mit der Dichtung in einer Abwicklungsdarstellung,
- Fig. 13c: das Thermomanagementsystem in einer zu der Fig. 1 analogen Darstellung, in einem zu der elften Drehlage des Ventilkörpers korrespondierenden Betriebszustand,
- Fig. 14a: eine alternative Ausführungsform des erfindungsgemäßen Mehrwegeventils, in analoger Darstellung zu den Fig. 2b und 2c, in einer ersten Drehlage und
- Fig. 14b: die zu der Fig. 14a korrespondierende Kontaktfläche zwischen dem Ventilkörper und dem Gehäuse mit der Dichtung in einer Abwicklungsdarstellung.

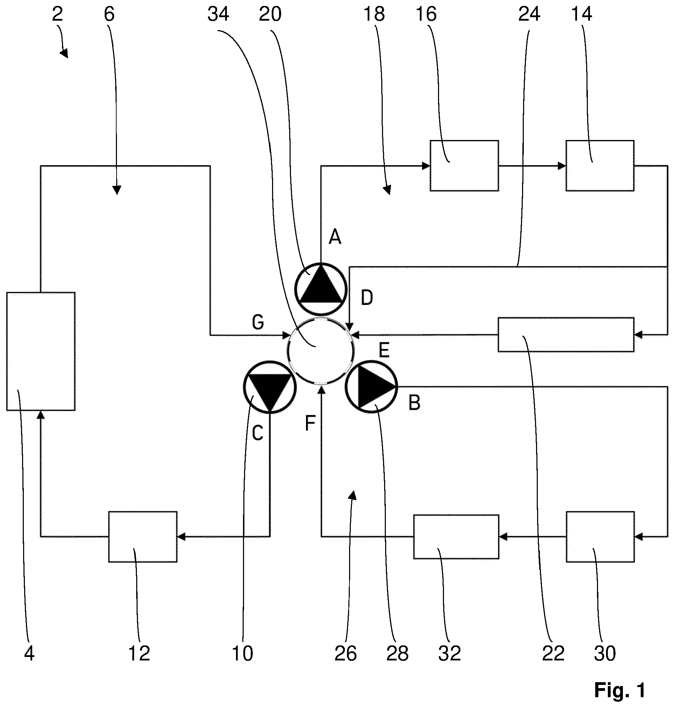

In den Fig. 1 bis 14b ist ein Ausführungsbeispiel des erfindungsgemäßen Thermomanagementsystems mit dem erfindungsgemäßen Mehrwegeventil rein exemplarisch dargestellt.

Das Thermomanagementsystem 2 ist für ein nicht näher dargestelltes Elektrofahrzeug geeignet ausgebildet und umfasst eine nicht dargestellte Steuerung, einen mit einer Antriebsbatterie 4 des Elektrofahrzeugs wärmeübertragend verbundenen Batteriekreislauf 6 mit einer Kühlmittelpumpe 10 und einem sogenannten Chiller 12, also einem Kühler, einen mit einem Elektroantrieb 14 des Elektrofahrzeugs und einer Leistungselektronik 16 für den Elektroantrieb 14 wärmeübertragend verbundenen Antriebskreislauf 18 mit einer Kühlmittelpumpe 20, einen mit einer freien Umgebung wärmeübertragend verbundenen Radiator 22 und einem Bypass 24 zu dem Radiator 22 sowie einen mit einem nicht dargestellten Fahrzeuginnenraum des Elektrofahrzeugs wärmeübertragend verbundenen Klimatisierungskreislauf 26 mit einer Kühlmittelpumpe 28, einer Heizung 30 und einem Wärmeübertrager 32, wobei der Batteriekreislauf 6, der Antriebskreislauf 18 und der Klimatisierungskreislauf 26 jeweils mit einem nicht dargestellten Kühlmittel betreibbar und mittels eines einzigen ansteuerbaren und als Mehrwegeventil 34 ausgebildeten Kühlmittelventils miteinander kühlmittelleitend verbindbar oder trennbar sind.

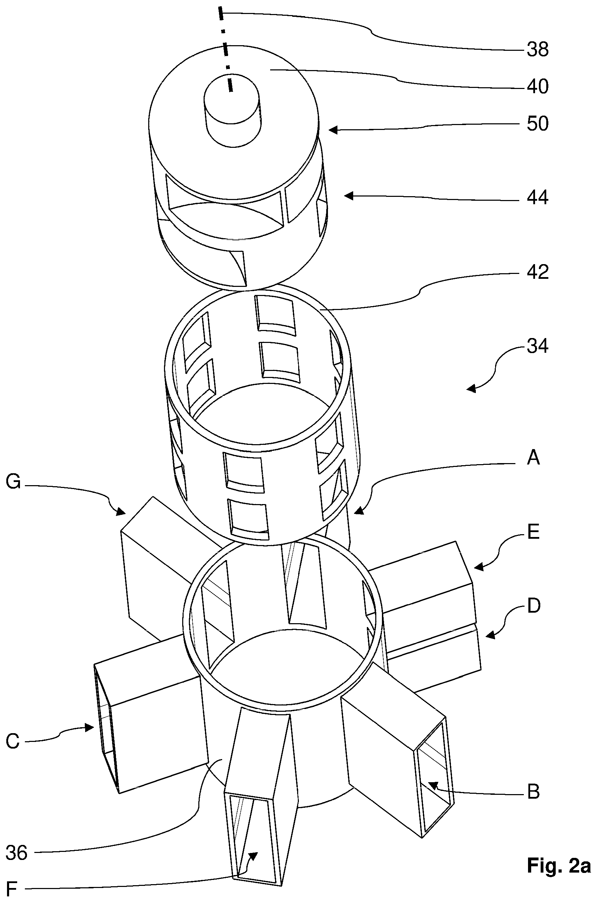

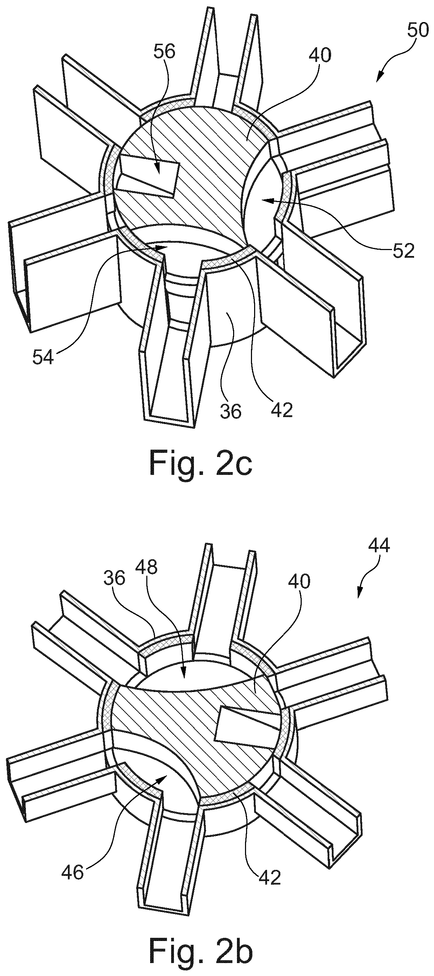

Das Mehrwegeventil 34 ist in den Fig. 2a bis 2c näher dargestellt und umfasst ein Gehäuse 36 mit insgesamt sieben Gehäuseöffnungen A, B, C, D, E, F, G, jeweils zur strömungsleitenden Verbindung mit einem externen, nicht dargestellten Strömungskanal für ein Fluid, nämlich das oben genannte Kühlmittel, und einen in dem Gehäuse 36 um eine Drehachse 38 drehbar angeordneten Ventilkörper 40 zur strömungsleitenden Verbindung von mindestens zwei der Gehäuseöffnungen A bis G des Gehäuses 36, wobei zwischen dem Gehäuse 36 und dem Ventilkörper 40 eine Dichtung 42 mit zu den Gehäuseöffnungen A bis G in dem Gehäuse 36 korrespondierenden Dichtungsöffnungen zur Abdichtung der strömungsleitenden Verbindungen gegenüber der freien Umgebung angeordnet ist. Da die Dichtungsöffnungen zu den Gehäuseöffnungen A bis G korrespondieren sind die Dichtungsöffnungen in den Fig. 2a bis 14b nicht explizit bezeichnet. Der Ventilkörper 40 weist eine erste Ebene 44 mit zwei ersten Verbindungskanälen 46, 48 und eine parallel zu der ersten Ebene 44 angeordnete zweite Ebene 50 mit zwei zweiten Verbindungskanälen 52, 54 auf, wobei die Verbindungskanäle 46, 48, 52, 54 voneinander strömungstechnisch getrennt sind und mittels einer Drehung des Ventilkörpers 40 in eine jeweils vorher festgelegte Drehlage des Ventilkörpers 40 jeweils mit mindestens zwei der Gehäuseöffnungen A bis G des Gehäuses 36 strömungsleitend verbindbar sind.

Bei dem vorliegenden Ausführungsbeispiel erstrecken sich die insgesamt fünf Paarungen, nämlich die Gehäuseöffnungen A, B, C, F, G, und die dazu korrespondierenden Dichtungsöffnungen, derart über die erste und die zweite Ebene 44, 50, dass diese Paarungen A, B, C, F, G der ersten Ebene 44 mit den ersten Verbindungskanälen 46, 48 und der zweiten Ebene 50 mit den zweiten Verbindungskanälen 52, 54 strömungsleitend zugeordnet und in Abhängigkeit der Drehlage des Ventilkörpers 40 mit einem der ersten und/oder einem der zweiten Verbindungskanäle 46, 48, 52, 54 im Wesentlichen ohne Querschnittsreduzierung, bezogen auf eine Strömung von dem jeweiligen Verbindungskanal 46, 48, 52, 54 in Richtung der vorgenannten Paarungen A, B, C, F, G, strömungsleitend verbindbar ist. Im Unterschied dazu sind zwei Paarungen, nämlich die Gehäuseöffnungen E und D und die dazu korrespondierenden Dichtungsöffnungen, derart übereinander angeordnet, dass die eine der vorgenannten Paarungen D der ersten Ebene 44 mit den ersten Verbindungskanälen 46, 48 und die andere der vorgenannten Paarungen E der zweiten Ebene 50 mit den zweiten Verbindungskanälen 52, 54 strömungsleitend zugeordnet ist. Die zu den Gehäuseöffnungen A, D und E korrespondierenden Paarungen verbinden das Mehrwegeventil 34 strömungsleitend mit dem Antriebskreislauf 18, die zu den Gehäuseöffnungen B und F korrespondierenden Paarungen verbinden das Mehrwegeventil 34 strömungsleitend mit dem Klimatisierungskreislauf 26 und die zu den Gehäuseöffnungen C und G korrespondierenden Paarungen verbinden das Mehrwegeventil 34 strömungsleitend mit dem Batteriekreislauf 6.

Der Ventilkörper 40 weist zusätzlich zu den ersten Verbindungskanälen 46, 48 und den zweiten Verbindungskanälen 52, 54 zur strömungsleitenden Verbindung von mindestens zwei der Gehäuseöffnungen A bis G zusätzlich einen dritten von den ersten und zweiten Verbindungskanälen 46, 48, 52, 54 strömungstechnisch getrennten Verbindungskanal 56 auf, wobei sich der dritte Verbindungskanal 56 über die erste und die zweite Ebene 44, 50 erstreckt, und wobei der dritte Verbindungskanal 56 als ein zentraler Kanal ausgebildet ist. Die zwei übereinander angeordneten zu den Gehäuseöffnungen E und D korrespondierenden Paarungen und der dritte Verbindungskanal 56 sind bei dem vorliegenden Ausführungsbeispiel derart aufeinander abgestimmt ausgebildet, dass der dritte Verbindungskanal 56 mit beiden vorgenannten Paarungen strömungsleitend verbindbar ist.

Wie aus den Fig. 2a bis 2c ersichtlich, sind die Gehäuseöffnungen A bis G und die dazu korrespondierenden Dichtungsöffnungen und die lichten Querschnitte der Verbindungskanäle 46, 48, 52, 54, beispielsweise zur Reduzierung von Druckverlusten, im Wesentlichen rechteckig ausgebildet. Im Unterschied zu kreisrunden Öffnungen und lichten Querschnitten lassen sich im Wesentlichen rechteckige Öffnungen und lichte Querschnitte viel platzsparender anordnen, so dass beispielsweise im Vergleich zu kreisrunden Öffnungen und lichten Querschnitten größere Strömungsquerschnitte möglich sind.

Wie aus den Fig. 2a bis 2c ferner hervorgeht, sind die Paarungen der Gehäuseöffnungen A bis G und der dazu korrespondierenden Dichtungsöffnungen derart symmetrisch um die Drehachse 38 des Ventilkörpers 40 angeordnet, dass Flächenschwerpunkte der vorgenannten Paarungen bei 0°, bei 60°, bei 120°, bei 180°, bei 240° und bei 300° positioniert sind. Eine Ausdehnung der jeweiligen Paarung der Gehäuseöffnungen A bis G und der dazu korrespondierenden Dichtungsöffnungen, bezogen auf die Drehachse 38 des Ventilkörpers 40 entspricht hier jeweils einem Winkel von 30°. Die Winkelangaben beziehen sich dabei auf eine Ebene senkrecht zu der Drehachse 38.

Die zwei ersten Verbindungskanäle und die zwei zweiten Verbindungskanäle 46, 48, 52, 54 sowie der die beiden Ebenen 44, 50 strömungsleitend verbindende dritte Verbindungskanal 56 weisen bei dem vorliegenden Ausführungsbeispiel Ausdehnungen auf, die, bezogen auf die Drehachse 38 des Ventilkörpers 40 und einer Kontaktfläche des Ventilkörpers 40 mit der Dichtung 42, den folgenden Winkelgruppen a oder b entsprechen. Die ersten Verbindungskanäle 46, 48 sind der Winkelgruppe b mit den Winkeln 120°, 90° und die zweiten Verbindungskanäle 52, 54 sind der Winkelgruppe a mit den Winkeln 90°, 90° zugeordnet, wobei die vorgenannte Ausdehnung des ersten Verbindungskanals 46 einem Winkel von 90°, die vorgenannte Ausdehnung des ersten Verbindungskanals 48 einem Winkel von 120°, die vorgenannte Ausdehnung des zweiten Verbindungskanals 52 und des zweiten Verbindungskanals 54 jeweils einem Winkel von 90° zugeordnet sind. Die Ausdehnung des dritten Verbindungskanals 56 ist, bezogen auf die Drehachse 38 des Ventilkörpers 40 und einer Kontaktfläche des Ventilkörpers 40 mit der Dichtung 42, einem Winkel von 30° zugeordnet. Die Winkelangaben beziehen sich dabei auf eine Ebene senkrecht zu der Drehachse 38.

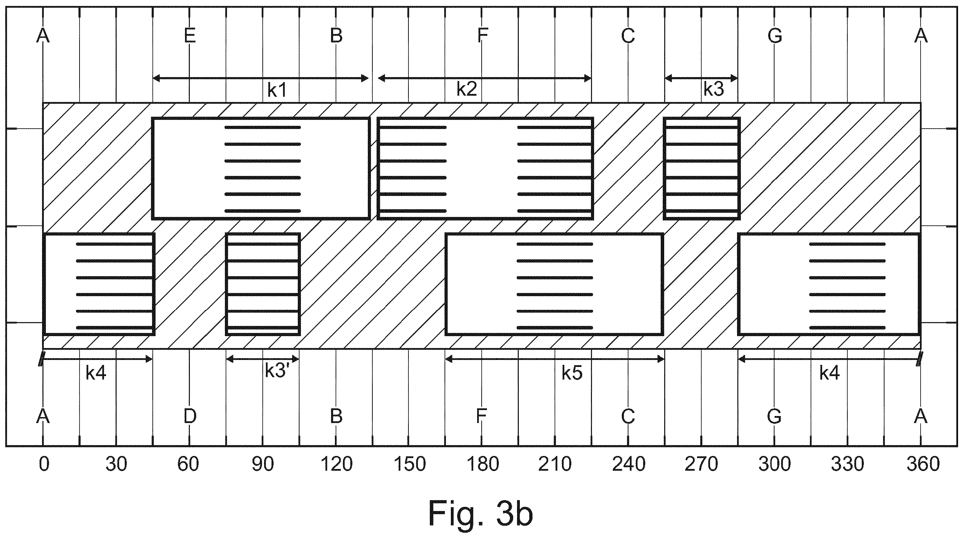

Die oben genannten Winkelangaben sind den einzelnen Abwicklungsdarstellungen, beispielsweise der Fig. 3b, entnehmbar.

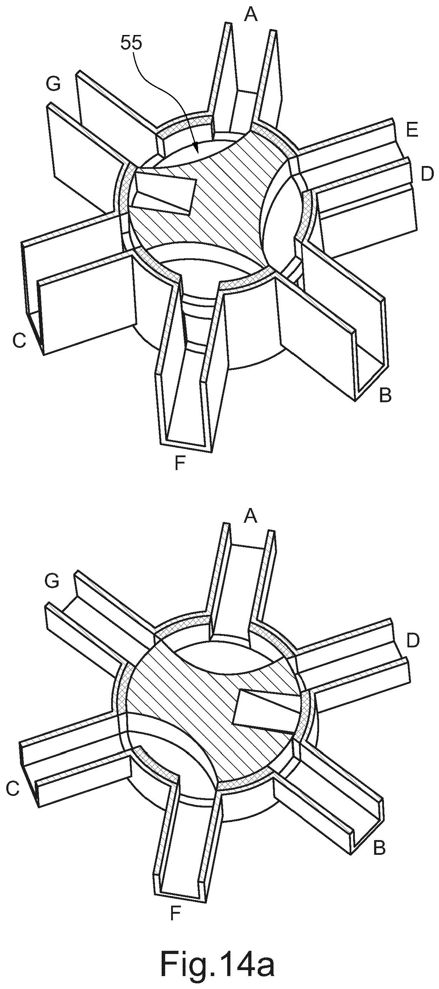

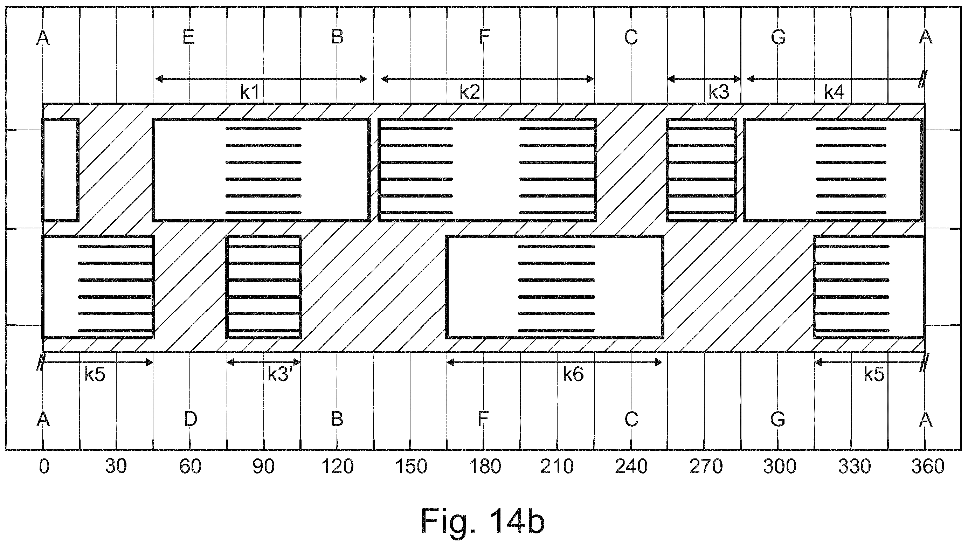

Jedoch sind auch andere Zuordnungen und andere Winkelgruppen grundsätzlich denkbar. Beispielsweise sei hierzu auf die Fig. 14a, 14b verwiesen, in denen rein exemplarisch eine mögliche andere Geometrie des Ventilkörpers 40 gezeigt ist. Zum einen weist die zweite Ebene 50 dieses Ventilkörpers 40 anstelle von zwei insgesamt drei zweite Verbindungskanäle 52, 54, 55 auf. Zum anderen sind die Ausdehnungen der ersten und der zweiten Verbindungskanäle 46, 48, 52, 54, 55 hier jeweils der oben genannten Winkelgruppe a zugeordnet, so dass jede der vorgenannten Ausdehnungen einem Winkel von 90° entspricht. Die vorgenannten Winkelangaben sind der in der Fig. 14b dargestellten Abwicklung entnehmbar.

Ferner sind die Paarungen der Gehäuseöffnungen A bis G und der dazu korrespondierenden Dichtungsöffnungen und der Ventilkörper 40 mit den Verbindungskanälen 46, 48, 52, 54, 56 derart aufeinander abgestimmt ausgebildet, dass ein durch eine der Gehäuseöffnungen A bis G einströmendes Fluid, also das Kühlmittel, mittels des Ventilkörpers 40 in Abhängigkeit der Drehlage des Ventilkörpers 40 auf mindestens zwei andere Gehäuseöffnungen der Gehäuseöffnungen A bis G aufteilbar ist.

Im Nachfolgenden wird die Funktionsweise des erfindungsgemäßen Thermomanagementsystems mit dem erfindungsgemäßen Mehrwegeventil gemäß dem vorliegenden Ausführungsbeispiel anhand der Fig. 1 bis 14b näher erläutert.

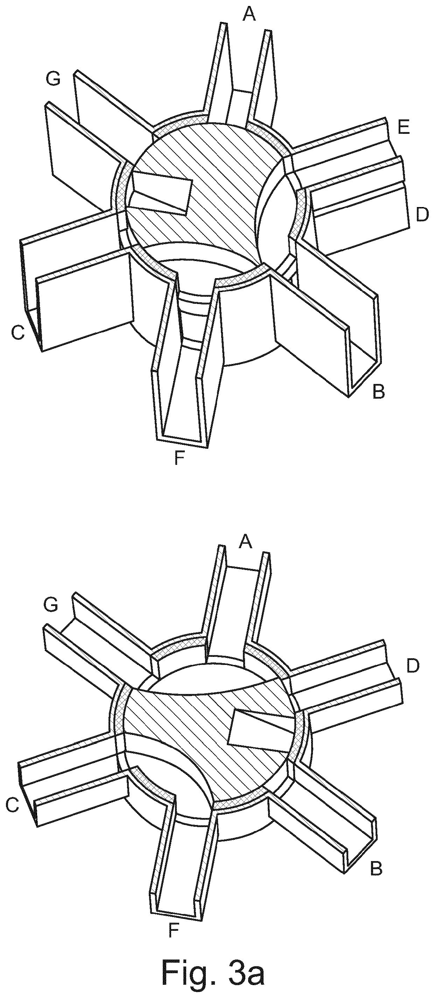

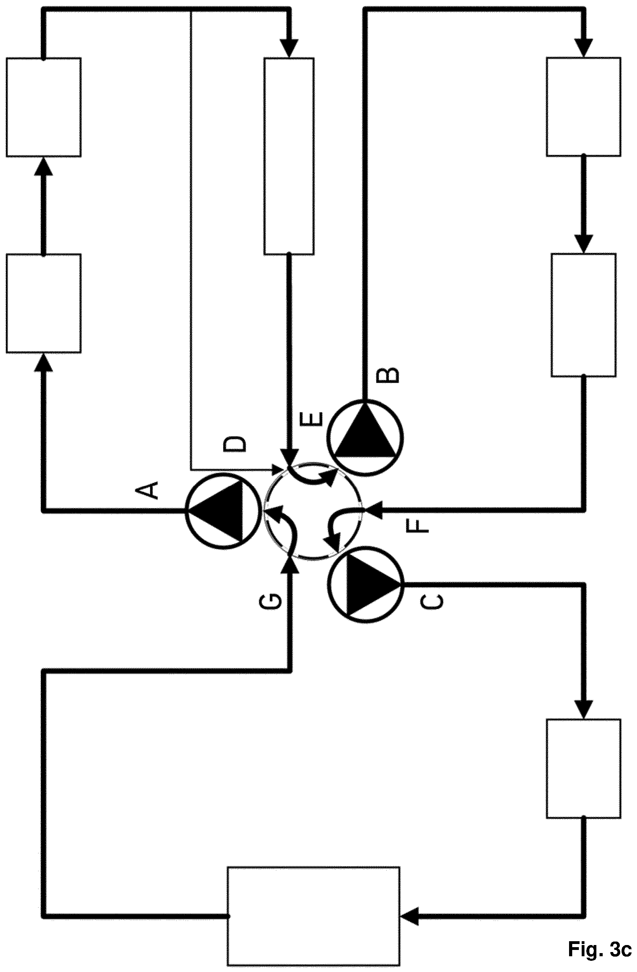

In den Fig. 3a bis 3c ist ein erster Betriebszustand des Thermomanagementsystems 2 mit dem Mehrwegeventil 34 in einer ersten Drehlage des Ventilkörpers 40 in drei zueinander korrespondierenden Darstellungen gezeigt. Die erste Drehlage des Ventilkörpers 40 ist insbesondere aus der Fig. 3a ersichtlich, in der das Mehrwegeventil 34 mit Blick auf die erste Ebene 44 des Ventilkörpers 40 wie auch mit Blick auf die zweite Ebene 50 des Ventilkörpers 40 dargestellt ist. In der Fig. 3b ist eine Abwicklung der Kontaktfläche zwischen dem Ventilkörper 40 auf der einen Seite und der Dichtung 42 auf der anderen Seite gezeigt. Auf der horizontalen Achse der Darstellung sind zur leichteren Orientierung zum einen die Winkelgrade von 0° bis 360° aufgetragen, wobei 0° und 360° identisch sind. Zum anderen sind die Paarungen der Gehäuseöffnungen A bis G und der dazu korrespondierenden Dichtungsöffnungen aufgetragen. Die diagonale Schraffur steht hier für den Ventilkörper 40, wohingegen die waagrechte Schraffur für die Dichtung 42 steht. Die Verbindungskanäle 46, 48, 52, 54, 56 des Ventilkörpers 40 sind jeweils durch ein Rechteck dargestellt. Wie aus der Fig. 3a und auch aus der Fig. 3b ersichtlich ist, sind die zu den Gehäuseöffnungen E und B korrespondierenden Paarungen mittels des zweiten Verbindungskanals 52, die zu den Gehäuseöffnungen A und G korrespondierenden Paarungen mittels des ersten Verbindungskanals 48 und die zu den Gehäuseöffnungen C und F korrespondierenden Paarungen mittels des ersten Verbindungskanal 46 strömungsleitend verbunden. In der Fig. 3c ist darüber hinaus gezeigt, wie sich die erste Drehlage des Mehrwegeventils 34 auf den dazu korrespondierenden ersten Betriebszustand des Thermomanagementsystems 2 auswirkt. Demnach entspricht der erste Betriebszustand einer Verbindung aller drei Kreisläufe 6, 18, 26 zu einem einzigen Gesamtkreislauf, wobei das Kühlmittel aus dem Antriebskreislauf 18 durch den Radiator 22 in das Mehrwegeventil 34 einströmt.

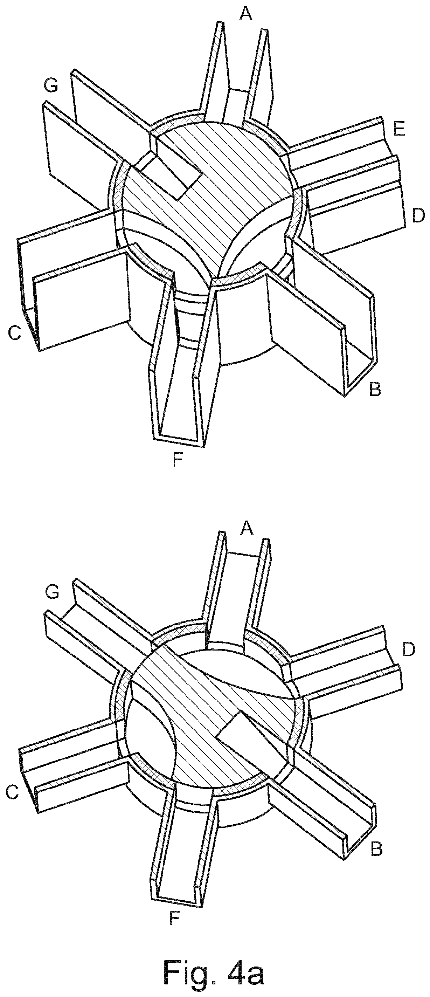

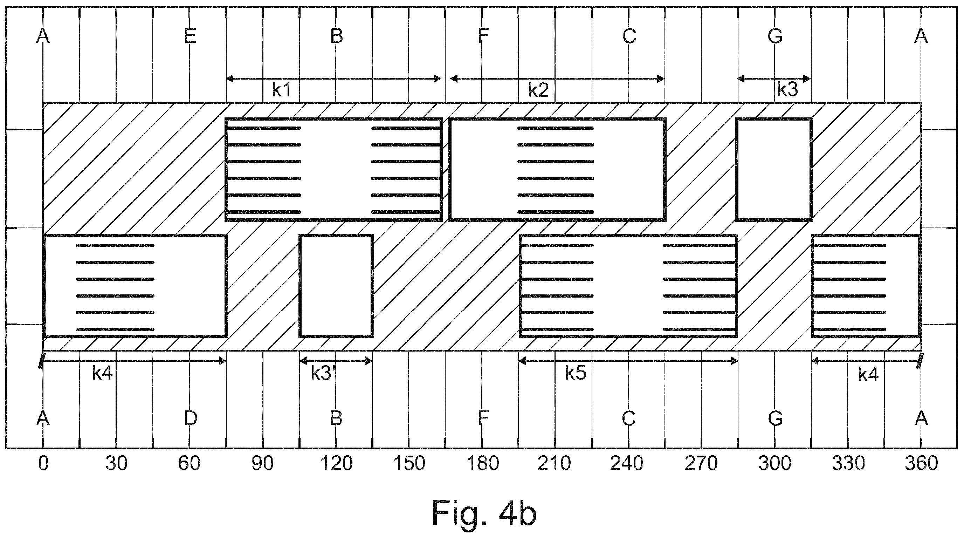

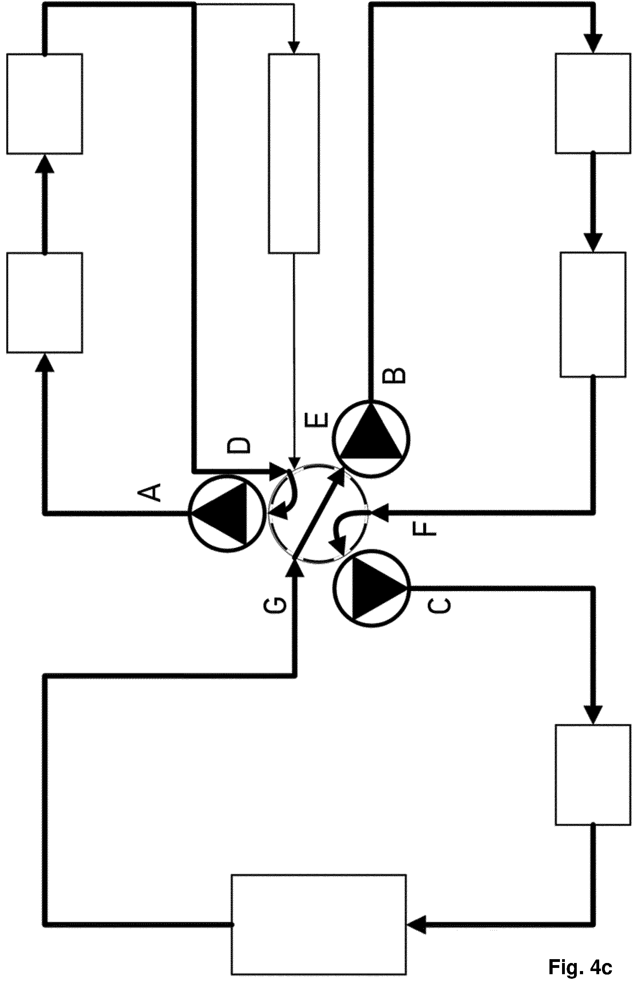

In den Fig. 4a bis 13c sind weitere zehn Betriebszustände des Thermomanagementsystems 2 analog zu dem ersten Betriebszustand des Thermomanagementsystems 2 gemäß der Fig. 3a bis 3c dargestellt. Entsprechend kann auf die obigen ausführlichen Erläuterungen zu dem ersten Betriebszustand des Thermomanagementsystems 2 weitestgehend verwiesen werden. Die Fig. 4a bis 13c werden deshalb nachfolgend lediglich kurz erläutert.

Die Fig. 4a bis 4c zeigen einen zweiten Betriebszustand des Thermomanagementsystems 2, der zu einer zweiten Drehlage des Ventilkörpers 40 des Mehrwegeventils 34 korrespondiert. In dem zweiten Betriebszustand sind die zu den Gehäuseöffnungen F und C, G und B sowie D und A korrespondierenden Paarungen miteinander strömungsleitend verbunden. Dies entspricht einer Verbindung von Batteriekreislauf 6 mit dem Klimatisierungskreislauf 26 zu einem Gesamtkreislauf, während der Antriebskreislauf 18 davon getrennt unter Verwendung des Bypass 24 durchströmt wird.

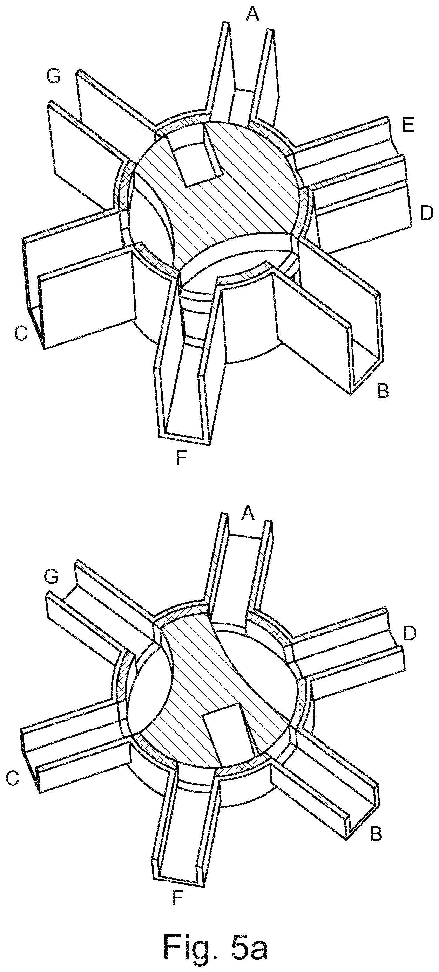

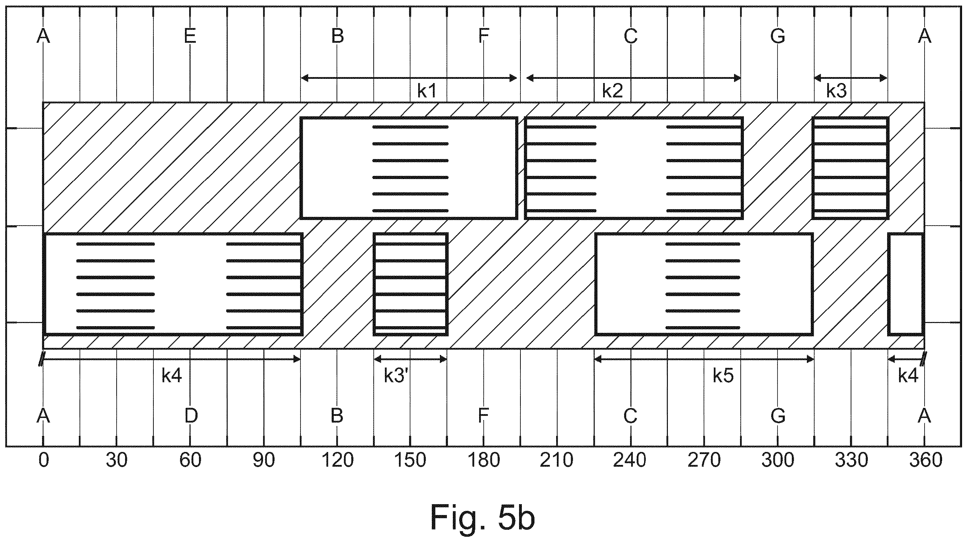

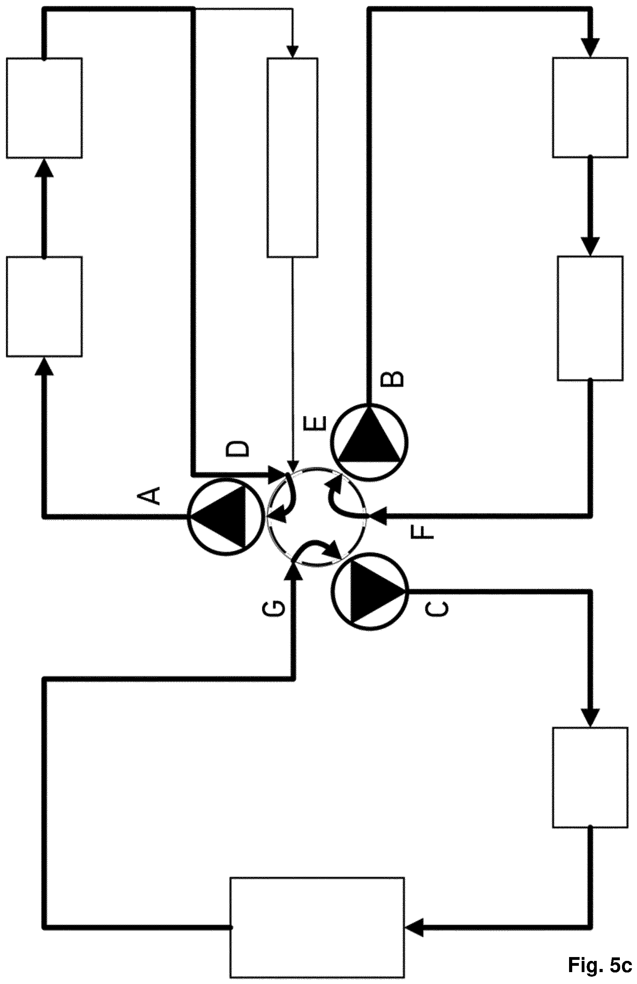

Die Fig. 5a bis 5c zeigen einen dritten Betriebszustand des Thermomanagementsystems 2, der zu einer dritten Drehlage des Ventilkörpers 40 des Mehrwegeventils 34 korrespondiert. In dem dritten Betriebszustand sind die zu den Gehäuseöffnungen F und B, D und A sowie G und C korrespondierenden Paarungen miteinander strömungsleitend verbunden. Somit wird jeder Kreislauf 6, 18, 26 separat durchströmt, wobei der Antriebskreislauf 18 unter Verwendung des Bypass 24 durchströmt wird. Es besteht also keine strömungsleitende Verbindung zwischen den einzelnen Kreisläufen 6, 18, 24.

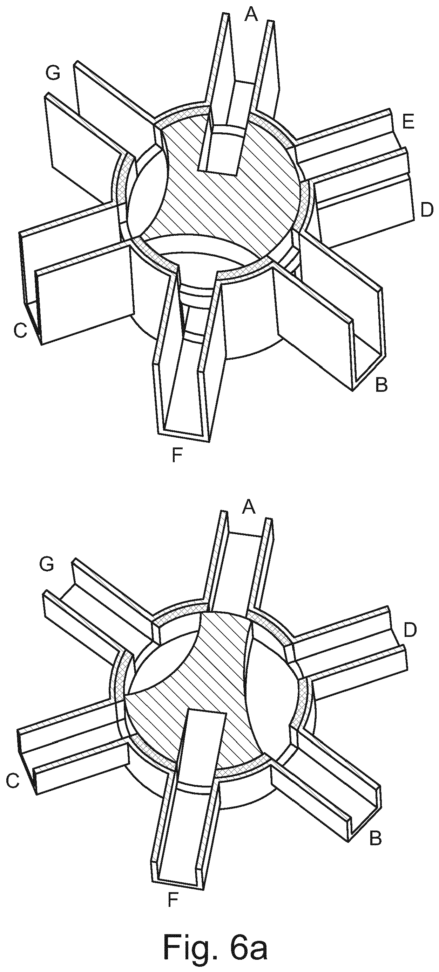

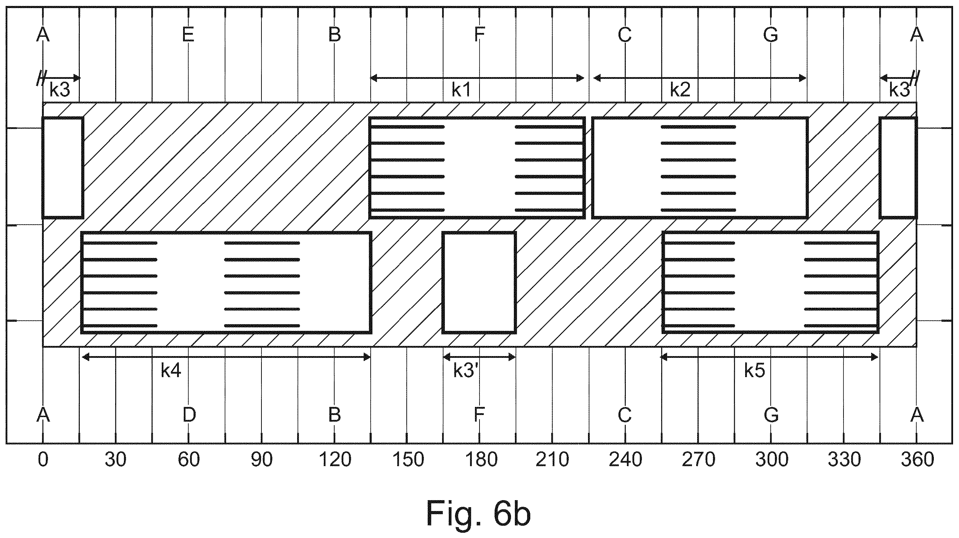

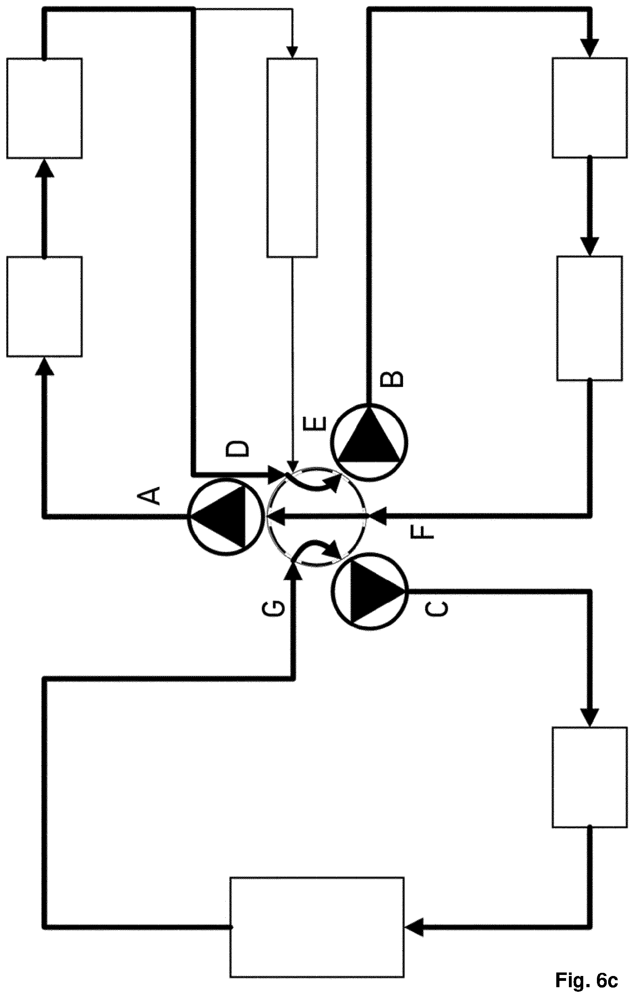

Die Fig. 6a bis 6c zeigen einen vierten Betriebszustand des Thermomanagementsystems 2, der zu einer vierten Drehlage des Ventilkörpers 40 des Mehrwegeventils 34 korrespondiert. In dem vierten Betriebszustand sind die zu den Gehäuseöffnungen G und C, F und A sowie D und B korrespondierenden Paarungen miteinander strömungsleitend verbunden. Dies entspricht einer Verbindung von Antriebskreislauf 18 und Klimatisierungskreislauf 26 zu einem Gesamtkreislauf, wobei der Antriebskreislauf 18 unter Verwendung des Bypass 24 durchströmt wird. Der Batteriekreislauf 6 wird davon getrennt durchströmt.

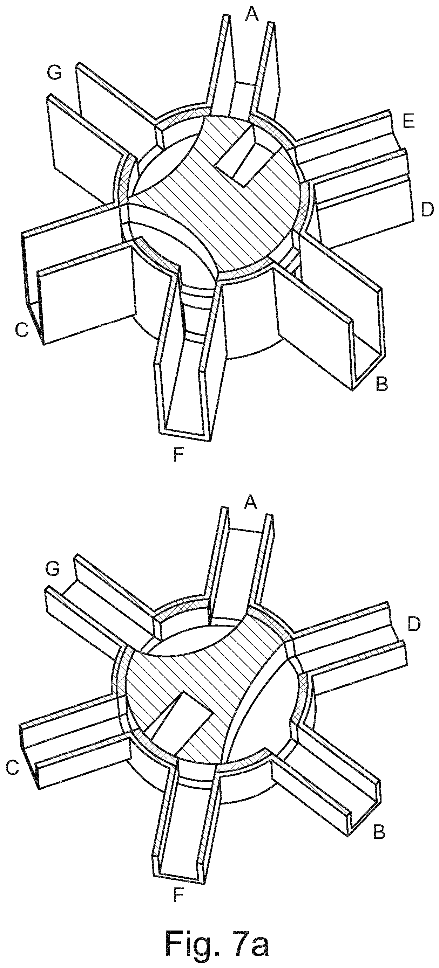

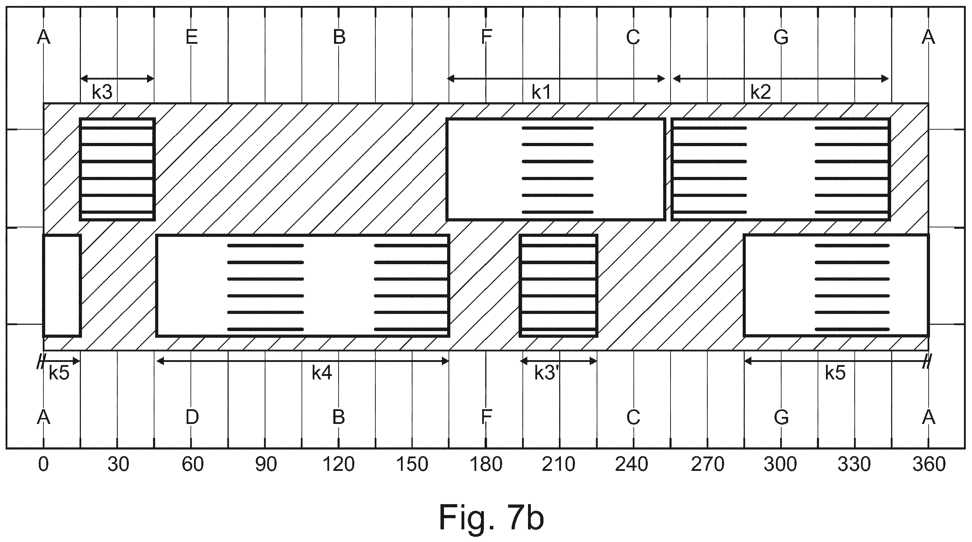

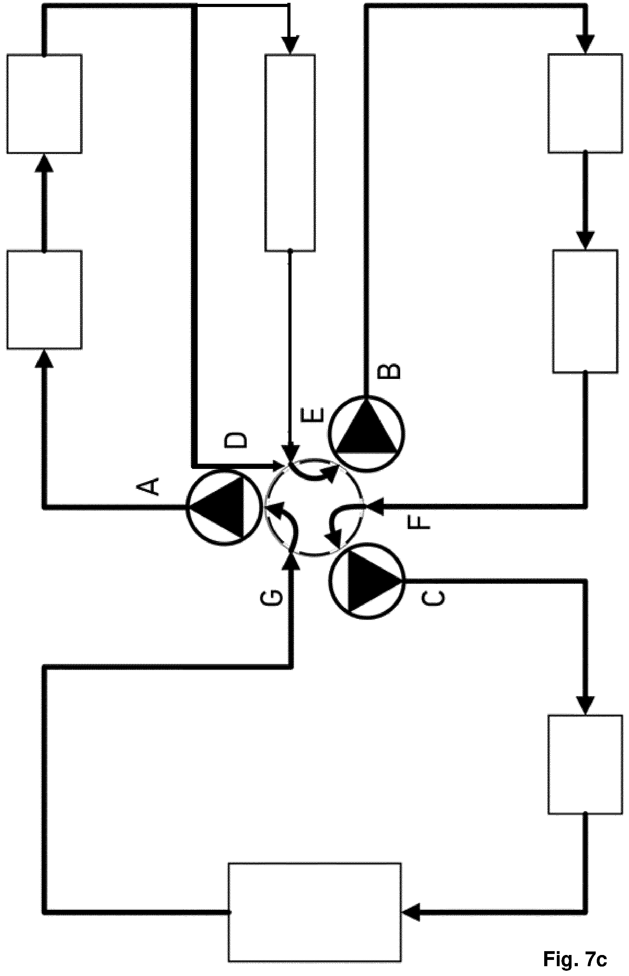

Die Fig. 7a bis 7c zeigen einen fünften Betriebszustand des Thermomanagementsystems 2, der zu einer fünften Drehlage des Ventilkörpers 40 des Mehrwegeventils 34 korrespondiert. In dem fünften Betriebszustand sind die zu den Gehäuseöffnungen F und C, D und B sowie G und A korrespondierenden Paarungen miteinander strömungsleitend verbunden. Dies entspricht einer Verbindung aller drei Kreisläufe 6, 18, 24 zu einem einzigen Gesamtkreislauf, wobei das Kühlmittel aus dem Antriebskreislauf 18 durch den Bypass 24 in das Mehrwegeventil 34 einströmt.

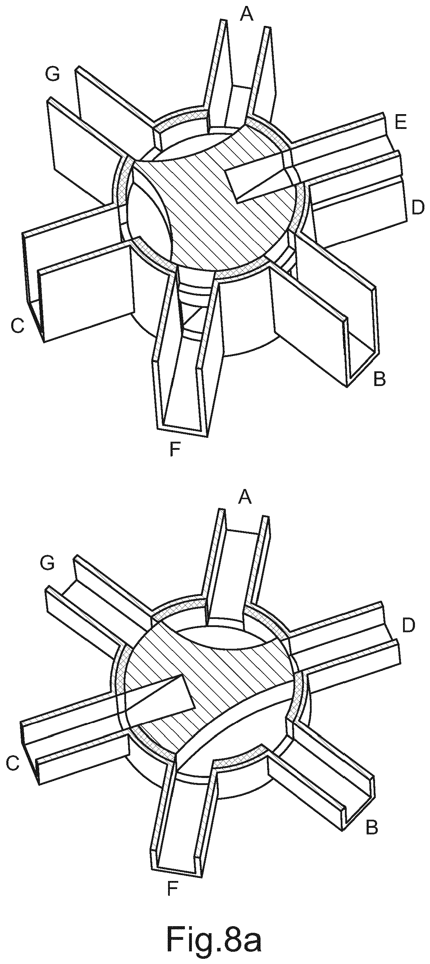

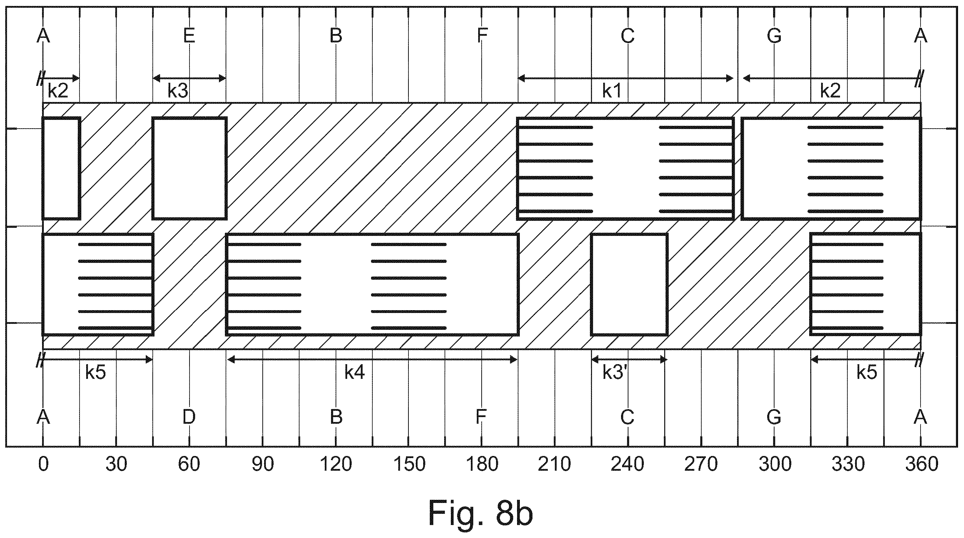

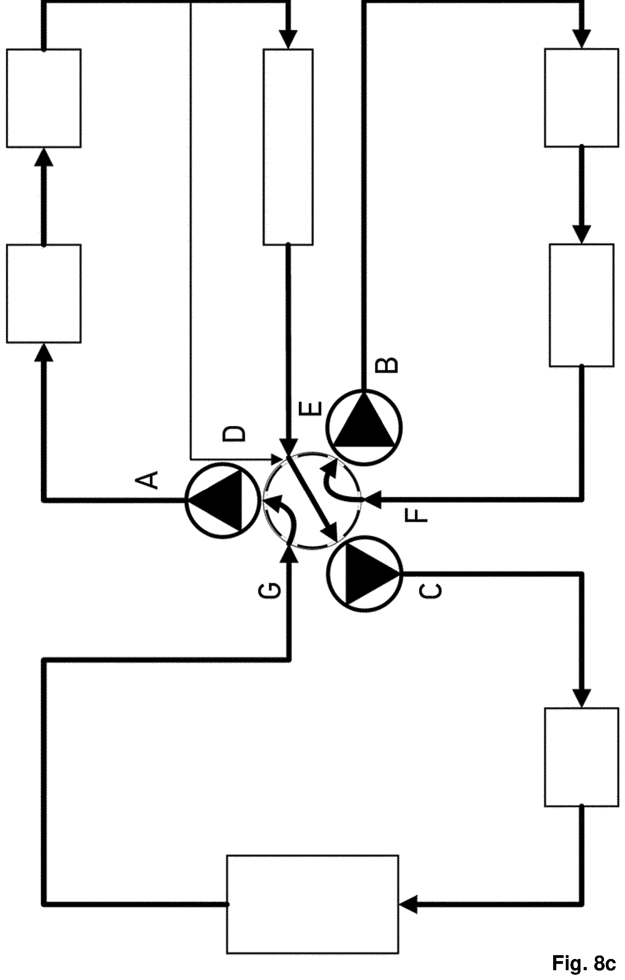

Die Fig. 8a bis 8c zeigen einen sechsten Betriebszustand des Thermomanagementsystems 2, der zu einer sechsten Drehlage des Ventilkörpers 40 des Mehrwegeventils 34 korrespondiert. In dem sechsten Betriebszustand sind die zu den Gehäuseöffnungen G und A, E und C sowie F und B korrespondierenden Paarungen miteinander strömungsleitend verbunden. Dies entspricht einer Verbindung von Antriebskreislauf 18 und Batteriekreislauf 6 zu einem Gesamtkreislauf, wobei der Antriebskreislauf 18 unter Verwendung des Radiators 22 durchströmt wird. Der Klimatisierungskreislauf 26 wird davon getrennt durchströmt.

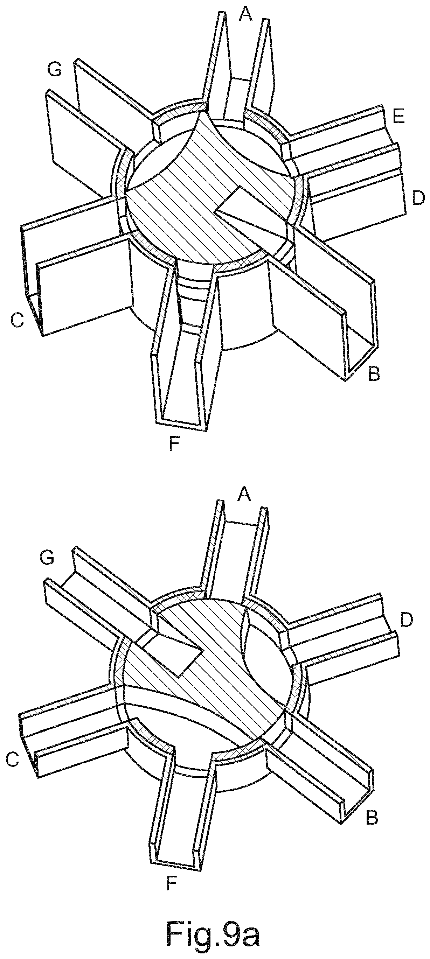

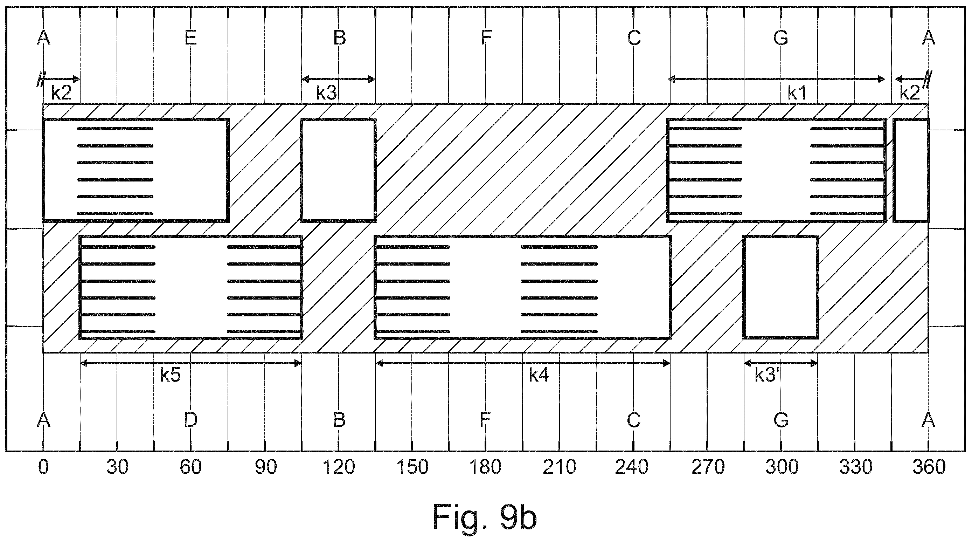

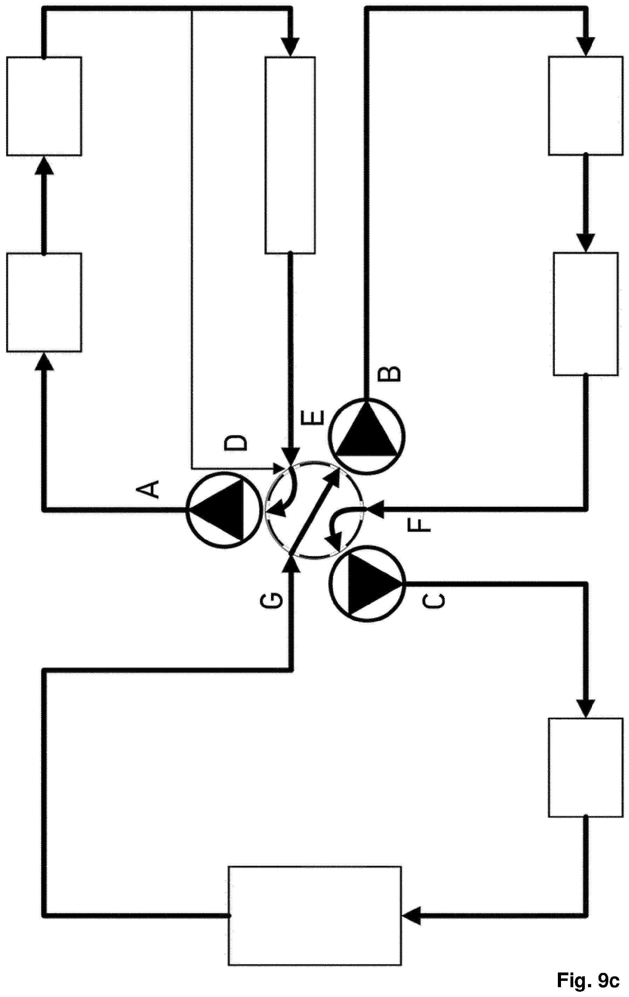

Die Fig. 9a bis 9c zeigen einen siebten Betriebszustand des Thermomanagementsystems 2, der zu einer siebten Drehlage des Ventilkörpers 40 des Mehrwegeventils 34 korrespondiert. In dem siebten Betriebszustand sind die zu den Gehäuseöffnungen E und A, G und B sowie F und C korrespondierenden Paarungen miteinander strömungsleitend verbunden. Dies entspricht einer Verbindung von Batteriekreislauf 6 und Klimatisierungskreislauf 26 zu einem Gesamtkreislauf, während der Antriebskreislauf 18 davon getrennt unter Verwendung des Radiators 22 durchströmt wird.

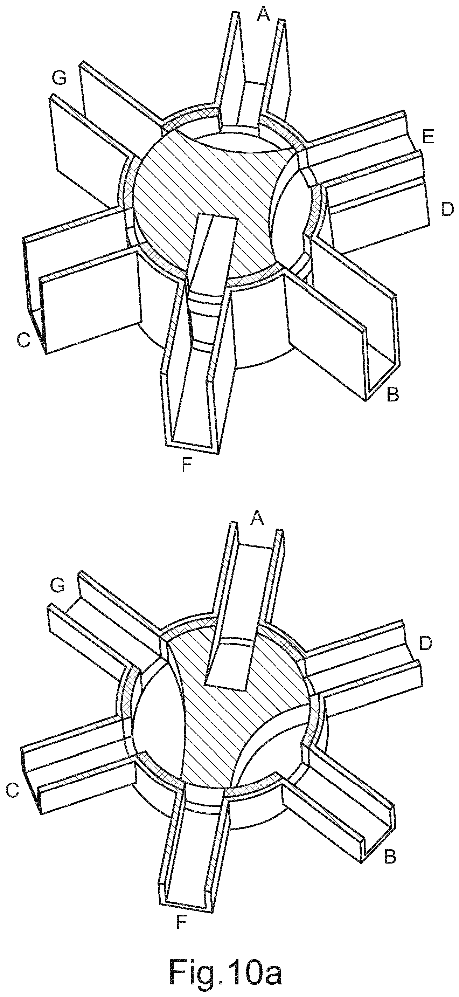

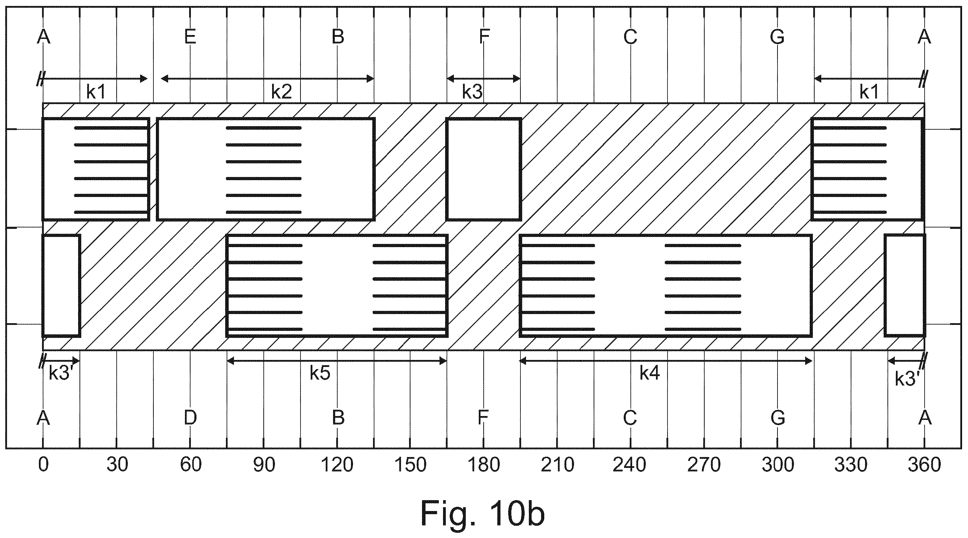

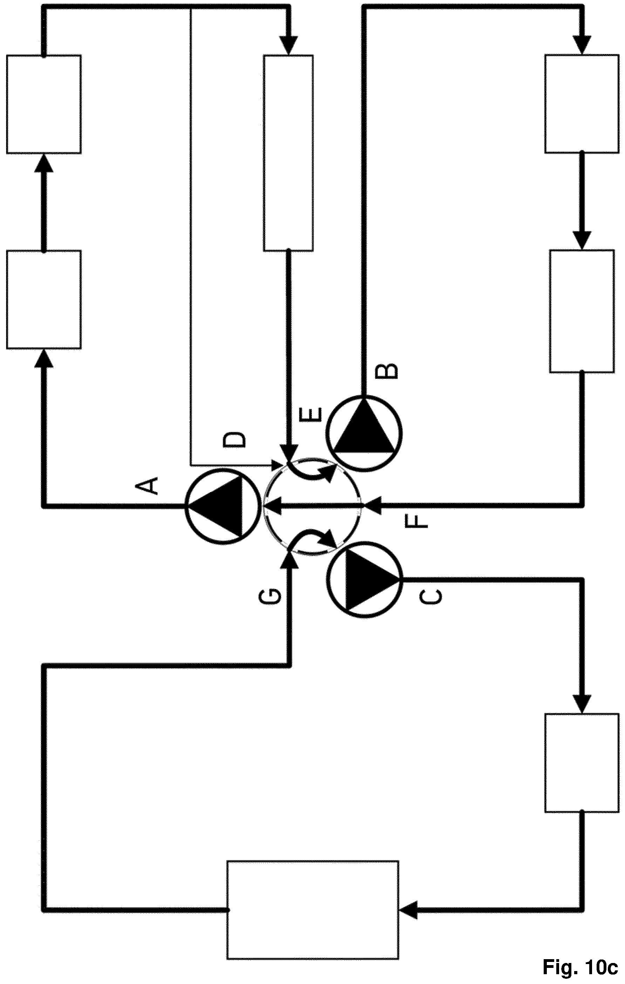

Die Fig. 10a bis 10c zeigen einen achten Betriebszustand des Thermomanagementsystems 2, der zu einer achten Drehlage des Ventilkörpers 40 des Mehrwegeventils 34 korrespondiert. In dem achten Betriebszustand sind die zu den Gehäuseöffnungen E und B, F und A sowie G und C korrespondierenden Paarungen miteinander strömungsleitend verbunden. Dies entspricht einer Verbindung von Antriebskreislauf 18 und Klimatisierungskreislauf 26 zu einem Gesamtkreislauf, wobei der Antriebskreislauf 18 unter Verwendung des Radiators 22 durchströmt wird. Der Batteriekreislauf 6 wird davon getrennt durchströmt.

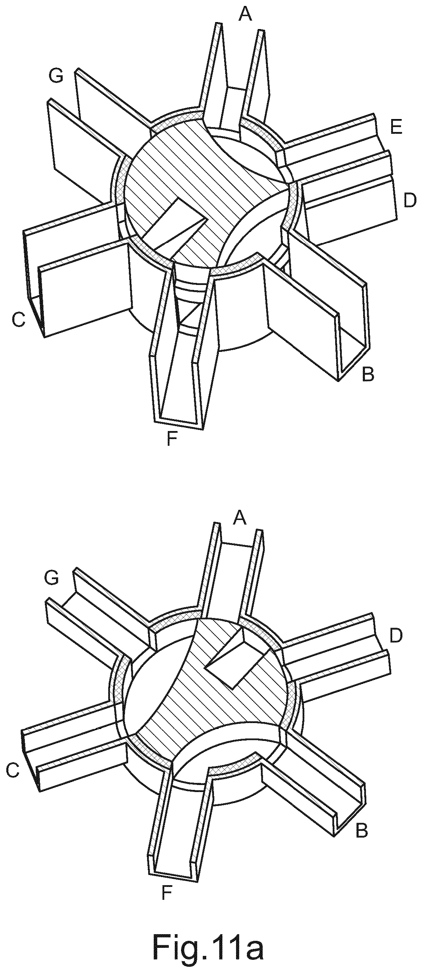

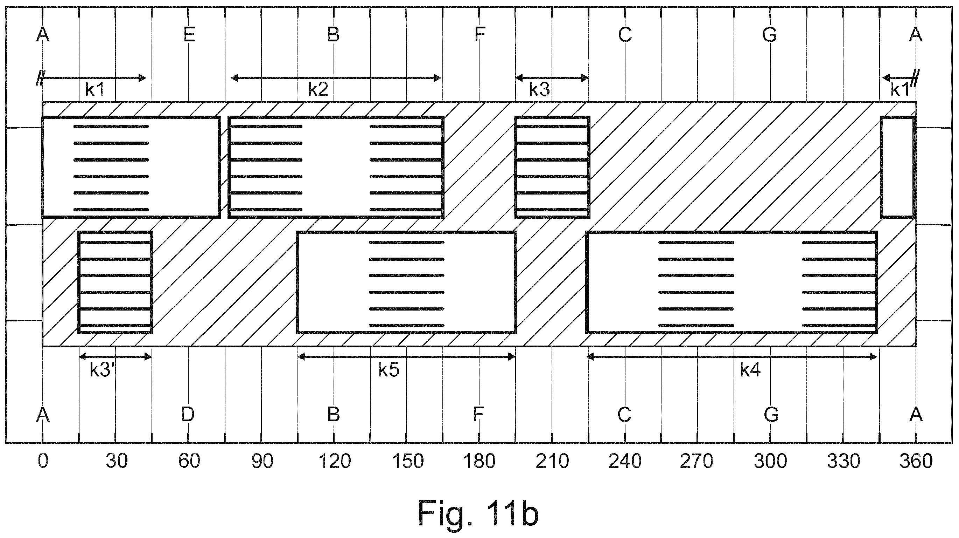

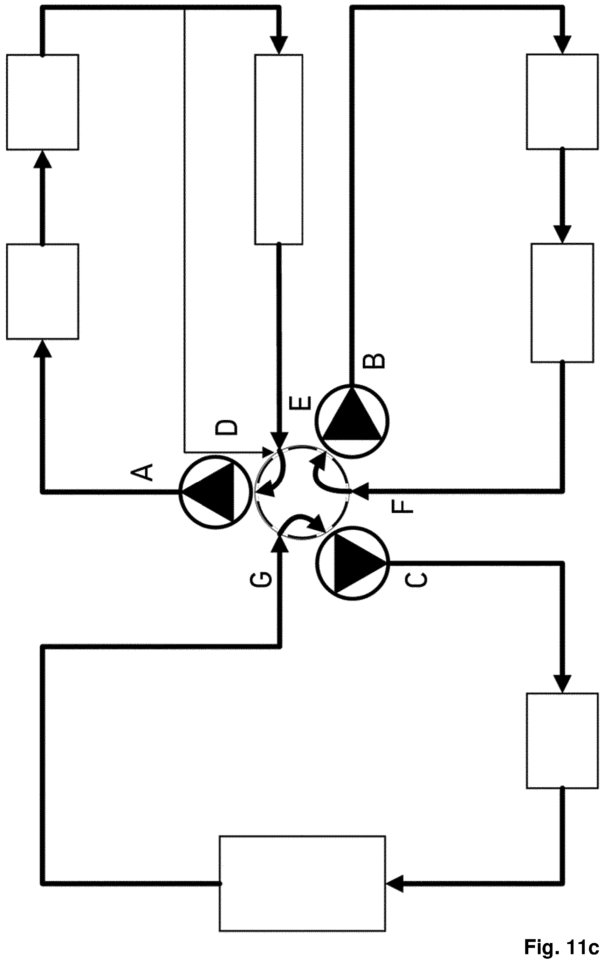

Die Fig. 11a bis 11c zeigen einen neunten Betriebszustand des Thermomanagementsystems 2, der zu einer neunten Drehlage des Ventilkörpers 40 des Mehrwegeventils 34 korrespondiert. In dem neunten Betriebszustand sind die zu den Gehäuseöffnungen E und A, F und B sowie G und C korrespondierenden Paarungen miteinander strömungsleitend verbunden. Somit wird jeder Kreislauf 6, 18, 26 separat durchströmt, wobei der Antriebskreislauf 18 unter Verwendung des Radiators 22 durchströmt wird. Es bestehen also keine strömungsleitenden Verbindungen zwischen den Kreisläufen 6, 18, 26.

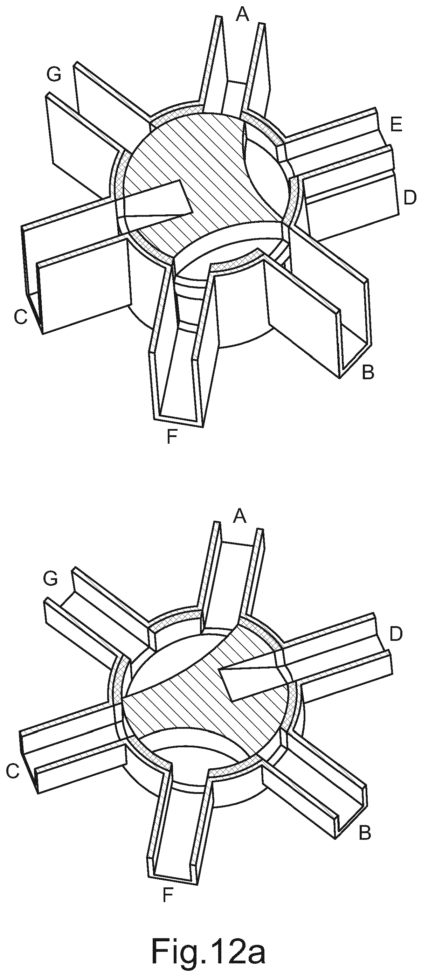

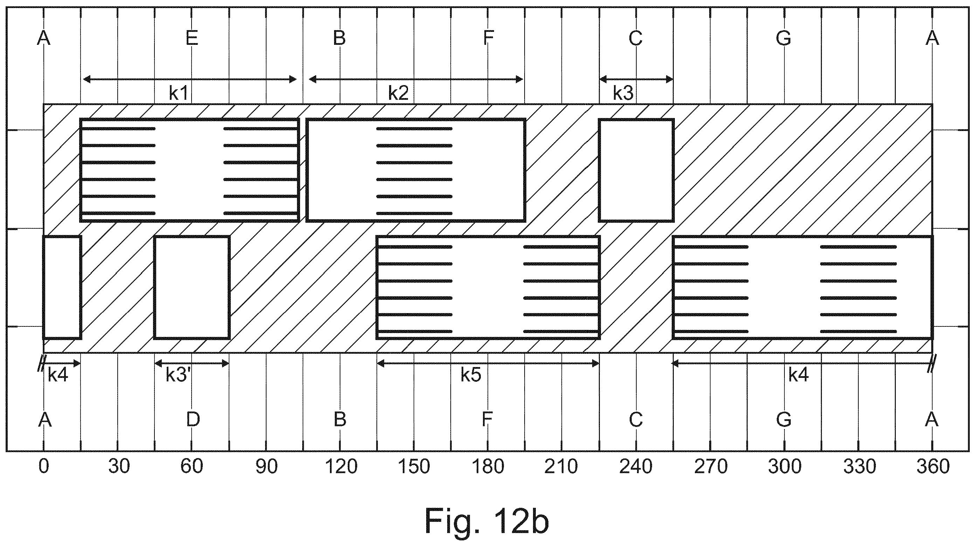

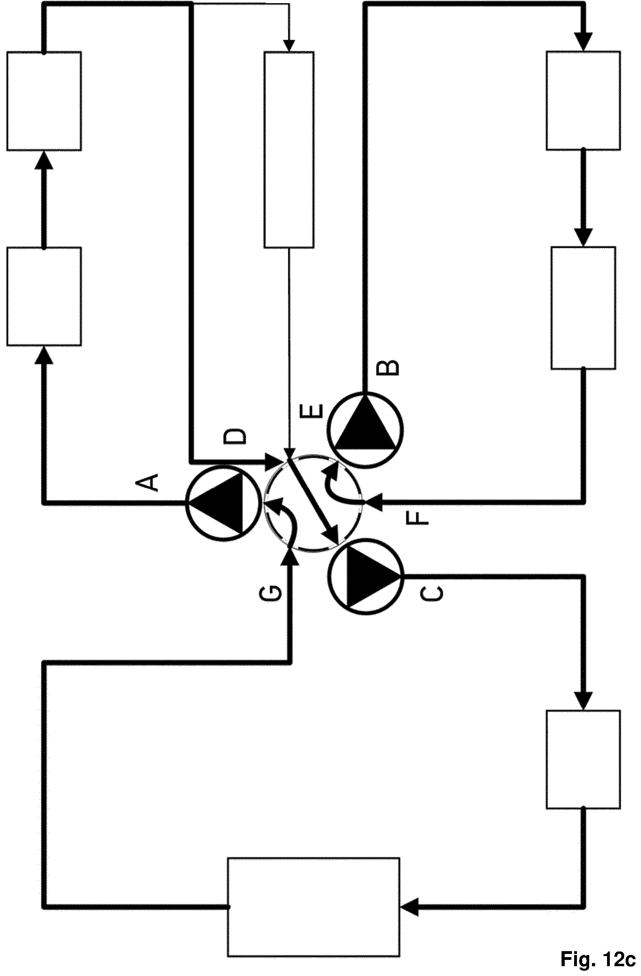

Die Fig. 12a bis 12c zeigen einen zehnten Betriebszustand des Thermomanagementsystems 2, der zu einer zehnten Drehlage des Ventilkörpers 40 des Mehrwegeventils 34 korrespondiert. In dem zehnten Betriebszustand sind die zu den Gehäuseöffnungen F und B, D und C sowie G und A korrespondierenden Paarungen miteinander strömungsleitend verbunden. Dies entspricht einer Verbindung von Antriebskreislauf 18 und Batteriekreislauf 6 zu einem Gesamtkreislauf, wobei der Antriebskreislauf 18 unter Verwendung des Bypass 24 durchströmt wird. Der Klimatisierungskreislauf 26 wird davon getrennt durchströmt.

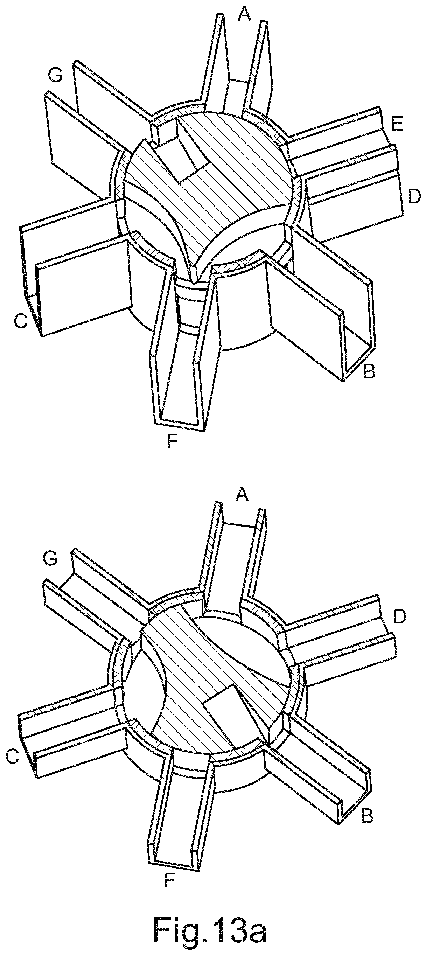

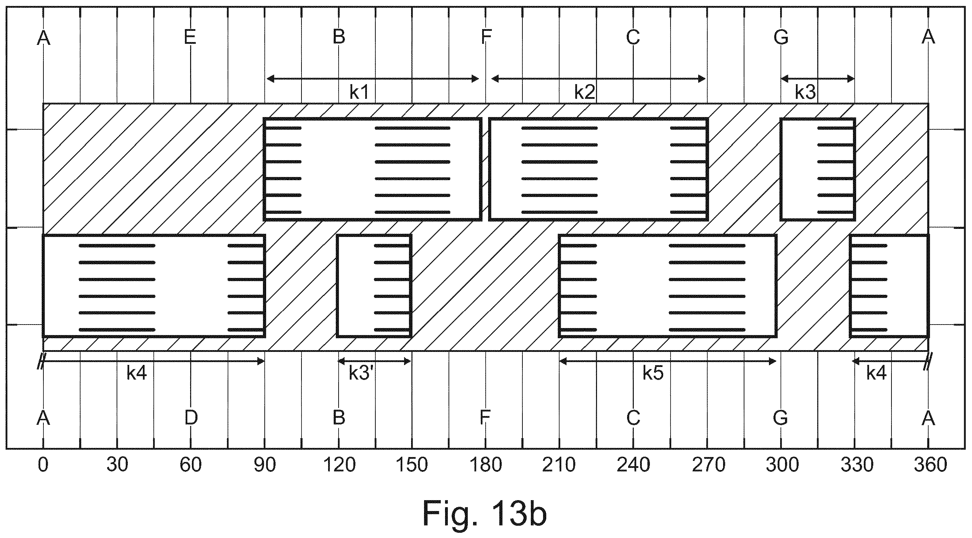

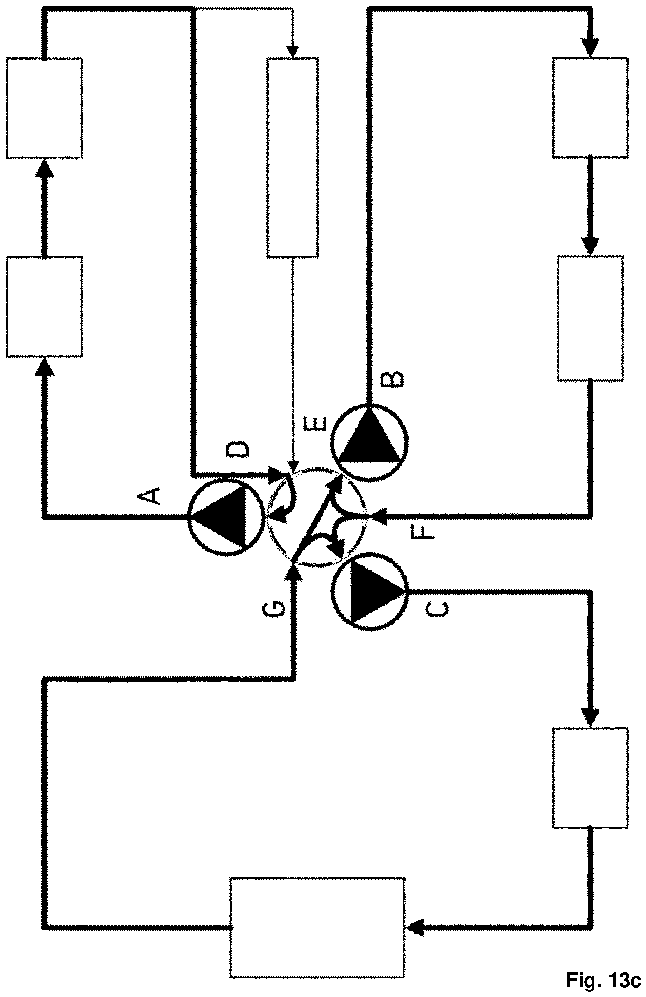

Zusätzlich zu den oben erläuterten zehn Betriebszuständen des Thermomanagementsystems 2 ist es mittels des Mehrwegeventils 34 möglich, Zwischenzustände zu realisieren, welche eine proportionale Verteilung der Kühlmittelströme zwischen den Kreisläufen 6, 18, 26 ermöglichen. Beispielhaft zeigen die Fig. 13a bis 13c einen elften Betriebszustand des Thermomanagementsystems 2, der zu einer elften Drehlage des Ventilkörpers 40 des Mehrwegeventils 34 korrespondiert. Dieser elfte Betriebszustand entspricht einem Mischzustand zwischen dem zweiten und dritten Betriebszustand. Siehe hierzu die Fig. 4a bis 4c für den zweiten Betriebszustand und die Fig. 5a bis 5c für den dritten Betriebszustand. In dem elften Betriebszustand sind die zu den folgenden Gehäuseöffnungen korrespondierenden Paarungen miteinander wie folgt strömungsleitend verbunden: F und B durch den zweiten Verbindungskanal 52, F und C durch den zweiten Verbindungskanal 54, G und B durch den dritten Verbindungskanal 56, D und A durch den ersten Verbindungskanal 48 sowie G und C durch den ersten Verbindungskanal 46.

Demnach stellt der elfte Betriebszustand die Verbindungen D nach A, F nach B und C, sowie G nach B und C her. Dies entspricht zum einen einer getrennten Durchströmung des Antriebskreislaufs 18 unter Verwendung des Bypass 24. Darüber hinaus besteht in dem elften Betriebszustand eine Verbindung der Fluidströme, also der Kühlmittelströme, zwischen dem Batteriekreislauf 6 und dem Klimatisierungskreislauf 26 zu einem Gesamtkreislauf.

Das heißt, dass der Fluidstrom, also der Kühlmittelstrom, in dem Klimatisierungskreislauf 26 teilweise getrennt von dem Batteriekreislauf 6 zirkuliert und zeitgleich teilweise zu dem Batteriekreislauf 6 geleitet wird. Gleichermaßen zirkuliert der Fluidstrom, also der Kühlmittelstrom, zum einen in dem Batteriekreislauf 6 teilweise getrennt von dem Klimatisierungskreislauf 26 und zum anderen wird dieser Fluidstrom zeitgleich teilweise zu dem Klimatisierungskreislauf 26 zurückgeleitet. Das Verhältnis der Teilströme in den Kreisläufen 6 und 26, nämlich das Verhältnis einer Teilströmung nur in einem der Kreisläufe 6 und 26 zu einer Teilströmung, welche zwischen den strömungsleitend verbundenen Kreisläufen 6 und 26 geteilt wird, wird durch eine kontinuierliche Verstellung der Drehlage des Ventilkörpers 40 und damit des Betriebszustands des Thermomanagementsystems 2 zwischen dem zweiten und dem dritten Betriebszustand realisiert. Folglich kann der beispielhaft gezeigte elfte Betriebszustand vorteilhaft genutzt werden, um zum Beispiel die Wärme der Heizung 30 in dem Klimatisierungskreislauf 26 sowohl zur Erwärmung des Fahrzeuginnenraums über den Wärmeübertrager 32 wie auch zeitgleich zur Erwärmung der Antriebsbatterie 4 in dem Batteriekreislauf 6 zu nutzen. Die kontinuierliche Verstellung der Drehlage des Ventilkörpers 40 des Mehrwegeventils 34 zwischen der zweiten und der dritten Drehlage des Ventilkörpers 40 wird dabei zur Regelung der Wärmeabgabe an den Batteriekreislauf 6 genutzt.

Mittels des Thermomanagementsystems 2 mit dem Mehrwegeventil 34 ist es somit möglich, eine Mehrzahl von externen Strömungskanälen eines Fluidsystems mit einer Mehrzahl von Fluidkreisläufen auf konstruktiv und schaltungstechnisch einfache Art und Weise anzusteuern. Entsprechend ist es möglich, eine Mehrzahl von üblichen Mehrwegeventilen einzusparen und durch lediglich ein einziges erfindungsgemäßes Mehrwegeventil, nämlich das Mehrwegeventil 34, zu ersetzen. Entsprechend sind der Montageaufwand und die Kosten sowie der erforderliche Bauraum reduziert.

Die Erfindung ist nicht auf das vorliegende Ausführungsbeispiel begrenzt. Beispielsweise ist die Erfindung auch bei anderen Arten von Fahrzeugen vorteilhaft einsetzbar. Insbesondere ist die Erfindung nicht auf die Details des vorliegenden

Ausführungsbeispiels beschränkt. Nur die beigefügten Ansprüche bestimmen den Umfang der Erfindung.

Beispielsweise ist es möglich, die oben erläuterte Geometrie des erfindungsgemäßen Mehrwegeventils zu variieren. Siehe hierzu auch die diesbezüglichen Ausführungen in der Beschreibung des konkreten Ausführungsbeispiels. Zum Beispiel ist ein Vertauschen der oberen und der unteren Ebene des Ventilkörpers 40 denkbar. Entsprechend kann die erste Ebene 44 an die Stelle der zweiten Ebene 50 und die zweite Ebene 50 an die Stelle der ersten Ebene 44 treten. Des Weiteren ist die gemäß der Fig. 14a und 14b kurz erläuterte Variante des Mehrwegeventils 34 denkbar. Beispielsweise kann der Ventilkörper des Mehrwegeventils 34, wie aus den Fig. 14a und 14b ersichtlich, modifiziert werden. Selbstverständlich sind auch andere Änderungen denkbar; der Fachmann wird je nach den Erfordernissen des Einzelfalls die geeignete Geometrie für das erfindungsgemäße Mehrwegeventil, also das Gehäuse sowie die Dichtung und/oder des Ventilkörpers, auswählen. Rein exemplarisch sei hier lediglich auf die weitere Möglichkeit hingewiesen, dass der Ventilkörper beispielsweise entlang der vertikalen Schnittebene mittig durch den als zentraler Kanal ausgebildeten dritten Verbindungskanal zu dem vorliegenden Ausführungsbeispiel nebst der Variante gemäß der Fig. 14a und 14b gespiegelt ausgebildet sein kann.

### Bezugszeichenliste

- 2: Thermomanagementsystem
- 4: Antriebsbatterie
- 6: Batteriekreislauf
- 10: Kühlmittelpumpe Batteriekreislauf
- 12: Chiller
- 14: Elektroantrieb
- 16: Leistungselektronik
- 18: Antriebskreislauf
- 20: Kühlmittelpumpe Antriebskreislauf
- 22: Radiator
- 24: Bypass zum Radiator
- 26: Klimatisierungskreislauf
- 28: Kühlmittelpumpe Klimatisierungskreislauf
- 30: Heizung
- 32: Wärmeübertrager
- 34: Mehrwegeventil
- 36: Gehäuse
- 38: Drehachse Ventilkörper
- 40: Ventilkörper
- 42: Dichtung
- 44: Erste Ebene Ventilkörper
- 46: Erster Verbindungskanal
- 48: Erster Verbindungskanal
- 50: Zweite Ebene Ventilkörper
- 52: Zweiter Verbindungskanal
- 54: Zweiter Verbindungskanal
- 55: Zweiter Verbindungskanal; nur Variante gemäß Fig. 14a und 14b
- 56: Dritter Verbindungskanal
- A bis G: Gehäuseöffnungen, mit dazu korrespondierenden Dichtungsöffnungen

## Patentansprüche

1. Mehrwegeventil (34) für ein Elektrofahrzeug, umfassend ein Gehäuse (36) mit mindestens sechs Gehäuseöffnungen (A bis G) jeweils zur strömungsleitenden Verbindung mit einem externen Strömungskanal für ein Fluid und einen in dem Gehäuse (36) um eine Drehachse (38) drehbar angeordneten Ventilkörper (40) zur strömungsleitenden Verbindung von mindestens zwei der Gehäuseöffnungen (A bis G) des Gehäuses (36), wobei zwischen dem Gehäuse (36) und dem Ventilkörper (40) eine Dichtung (42) mit zu den Gehäuseöffnungen (A bis G) in dem Gehäuse (36) korrespondierenden Dichtungsöffnungen zur Abdichtung der strömungsleitenden Verbindungen gegenüber der freien Umgebung angeordnet ist, und wobei der Ventilkörper (40) eine erste Ebene (44) mit mindestens zwei ersten Verbindungskanälen (46, 48) und eine parallel zu der ersten Ebene (44) angeordnete zweite Ebene (50) mit mindestens zwei zweiten Verbindungskanälen (52, 54; 52, 54, 55) aufweist, wobei die Verbindungskanäle (46, 48, 52, 54; 46, 48, 52, 54, 55) voneinander strömungstechnisch getrennt sind und mittels einer Drehung des Ventilkörpers (40) in eine jeweils vorher festgelegte Drehlage des Ventilkörpers (40) jeweils mit mindestens zwei der Gehäuseöffnungen (A bis G) des Gehäuses (36) strömungsleitend verbindbar sind, und wobei sich mindestens eine Paarung der Gehäuseöffnungen (A bis G) und der dazu korrespondierenden Dichtungsöffnungen derart über die erste und die zweite Ebene (44, 50) erstreckt, dass diese Paarung (A, B, C, F, G) der ersten Ebene (44) mit den ersten Verbindungskanälen (46, 48) und der zweiten Ebene (50) mit den zweiten Verbindungskanälen (52, 54; 52, 54, 55) strömungsleitend zugeordnet ist und in Abhängigkeit der Drehlage des Ventilkörpers (40) mit einem der ersten und/oder einem der zweiten Verbindungskanäle (46, 48, 52, 54; 46, 48, 52, 54, 55) im Wesentlichen ohne Querschnittsreduzierung, bezogen auf eine Strömung von dem jeweiligen Verbindungskanal (46, 48, 52, 54; 46, 48, 52, 54, 55) in Richtung der vorgenannten Paarung (A, B, C, F, G), strömungsleitend verbindbar ist **dadurch gekennzeichnet,**
**dass** mindestens zwei Paarungen der Gehäuseöffnungen (A bis G) und der dazu korrespondierenden Dichtungsöffnungen derart übereinander angeordnet sind, dass die eine der vorgenannten Paarungen (D) der ersten Ebene (44) mit den ersten Verbindungskanälen (46, 48) und die andere der vorgenannten Paarungen (E) der zweiten Ebene (50) mit den zweiten Verbindungskanälen (52, 54; 52, 54, 55) strömungsleitend zugeordnet ist.

2. Mehrwegeventil (34) nach Anspruch 1,
**dadurch gekennzeichnet,**
**dass** sich eine Mehrzahl der Paarungen der Gehäuseöffnungen (A bis G) und der dazu korrespondierenden Dichtungsöffnungen derart über die erste und die zweite Ebene (44, 50) erstrecken, dass diese Paarungen (A, B, C, F, G) der ersten Ebene (44) mit den ersten Verbindungskanälen (46, 48) und der zweiten Ebene (50) mit den zweiten Verbindungskanälen (52, 54; 52, 54, 55) strömungsleitend zugeordnet sind und jeweils in Abhängigkeit der Drehlage des Ventilkörpers (40) mit einem der ersten und/oder einem der zweiten Verbindungskanäle (46, 48, 52, 54; 46, 48, 52, 54, 55) im Wesentlichen ohne Querschnittsreduzierung, bezogen auf eine Strömung von dem jeweiligen Verbindungskanal (46, 48, 52, 54; 46, 48, 52, 54, 55) in Richtung der vorgenannten Paarungen (A, B, C, F, G), strömungsleitend verbindbar ist.

3. Mehrwegeventil (34) nach Anspruch 1 oder 2,
**dadurch gekennzeichnet,**
**dass** der Ventilkörper (40) zur strömungsleitenden Verbindung von mindestens zwei der Gehäuseöffnungen (A bis G) zusätzlich mindestens einen dritten von den ersten und zweiten Verbindungskanälen (46, 48, 52, 54; 46, 48, 52, 54, 55) strömungstechnisch getrennten Verbindungskanal (56) aufweist, wobei sich der dritte Verbindungskanal (56) über die erste und die zweite Ebene (44, 50) erstreckt, bevorzugt, dass der dritte Verbindungskanal (56) als ein zentraler Kanal ausgebildet ist.

4. Mehrwegeventil (34) nach Anspruch 3,
**dadurch gekennzeichnet,**
**dass** die zwei übereinander angeordneten Paarungen der Gehäuseöffnungen (D, E) und der dazu korrespondierenden Dichtungsöffnungen und der dritte Verbindungskanal (56) derart aufeinander abgestimmt ausgebildet sind, dass der dritte Verbindungskanal (56) mit mindestens einer der beiden Paarungen (D, E) strömungsleitend verbindbar ist.

5. Mehrwegeventil (34) nach einem der Ansprüche 1 bis 4,
**dadurch gekennzeichnet,**
**dass** die Paarungen der Gehäuseöffnungen (A bis G) und der dazu korrespondierenden Dichtungsöffnungen derart symmetrisch um die Drehachse (38) des Ventilkörpers (40) angeordnet sind, dass Flächenschwerpunkte der vorgenannten Paarungen (A bis G) bei 0°, bei 60°, bei 120°, bei 180°, bei 240° und bei 300° positioniert sind.

6. Mehrwegeventil (34) nach einem der Ansprüche 1 bis 5, **dadurch gekennzeichnet, dass** eine Ausdehnung der jeweiligen Paarung der Gehäuseöffnungen (A bis G) und der dazu korrespondierenden Dichtungsöffnungen, bezogen auf die Drehachse (38) des Ventilkörpers (40), jeweils einem Winkel von 30° entspricht.

7. Mehrwegeventil (34) nach einem der Ansprüche 1 bis 6, **dadurch gekennzeichnet, dass** die ersten und die zweiten Verbindungskanäle (46, 48, 52, 54; 46, 48, 52, 54, 55) Ausdehnungen aufweisen, die, bezogen auf die Drehachse (38) des Ventilkörpers (40) und einer Kontaktfläche des Ventilkörpers (40) mit der Dichtung (42), den folgenden Winkelgruppen a oder b entsprechen: a) jeweils 90°; b) teilweise 120°, teilweise 90°, bevorzugt, dass der mindestens eine dritte Verbindungskanal (56) eine Ausdehnung aufweist, die, bezogen auf die Drehachse (38) des Ventilkörpers (40) und der Kontaktfläche des Ventilkörpers (40) mit der Dichtung (42), einem Winkel von 30° entspricht.

8. Mehrwegeventil (34) nach einem der Ansprüche 1 bis 7, **dadurch gekennzeichnet, dass** die Paarungen der Gehäuseöffnungen (A bis G) und der dazu korrespondierenden Dichtungsöffnungen und der Ventilkörper (40) mit den Verbindungskanälen (46, 48, 52, 54, 56; 46, 48, 52, 54, 55, 56) derart aufeinander abgestimmt ausgebildet sind, dass ein durch eine der Gehäuseöffnungen (A bis G) einströmendes Fluid mittels des Ventilkörpers (40) in Abhängigkeit der Drehlage des Ventilkörpers (40) auf mindestens zwei andere der Gehäuseöffnungen (A bis G) aufteilbar ist.

9. Thermomanagementsystem (2) für ein Elektrofahrzeug, umfassend eine Steuerung, einen mit einer Antriebsbatterie (4) des Elektrofahrzeugs wärmeübertragend verbundenen Batteriekreislauf (6), einen mit einem Elektroantrieb (14) des Elektrofahrzeugs und/oder einer Leistungselektronik (16) für einen Elektroantrieb (14) wärmeübertragend verbundenen Antriebskreislauf (18) und einen mit einem Fahrzeuginnenraum des Elektrofahrzeugs wärmeübertragend verbundenen Klimatisierungskreislauf (26), wobei der Batteriekreislauf (6), der Antriebskreislauf (18) und der Klimatisierungskreislauf (26) jeweils mit einem Kühlmittel betreibbar und mittels mindestens eines ansteuerbaren Kühlmittelventils miteinander kühlmittelleitend verbindbar oder trennbar sind,
**dadurch gekennzeichnet,**
**dass** das mindestens eine Kühlmittelventil als ein einziges Mehrwegeventil (34) nach einem der Ansprüche 1 bis 8 ausgebildet ist.

10. Thermomanagementsystem (2) nach Anspruch 9,
**dadurch gekennzeichnet,**
**dass** das Mehrwegeventil (34) insgesamt sieben Paarungen der Gehäuseöffnungen (A bis G) und der dazu korrespondierenden Dichtungsöffnungen aufweist, wobei der Antriebskreislauf (18) mit drei der vorgenannten Paarungen und der Batteriekreislauf (6) und der Klimatisierungskreislauf (26) mit jeweils zwei der vorgenannten Paarungen strömungsleitend verbunden ist.

## Claims

1. A multiway valve (34) for an electric vehicle, comprising a housing (36) with at least six housing openings (A to G) each for flow-conducting connection to an external flow channel for a fluid and a valve body (40) arranged in the housing (36) rotatably about an axis of rotation (38) for flow-conducting connection of at least two of the housing openings (A to G) of the housing (36), in which a seal (42) with sealing openings corresponding to the housing openings (A to G) in the housing (36) is arranged between the housing (36) and the valve body (40) for sealing the flow-conducting connections from the free environment, and in which the valve body (40) has a first plane (44) with at least two first connecting channels (46, 48) and a second plane (50) arranged parallel to the first plane (44) with at least two second connecting channels (52, 54; 52, 54, 55), in which the connecting channels (46, 48, 52, 54; 46, 48, 52, 54, 55) are fluidically separated from one another and can each be connected in a flow-conducting manner to at least two of the housing openings (A to G) of the housing (36) by means of a rotation of the valve body (40) into a respectively predetermined rotational position of the valve body (40), and in which at least one pairing of the housing openings (A to G) and the corresponding sealing openings extends over the first and second planes (44, 50) in such a way that this pairing (A, B, C, F, G) is assigned in a flow-conducting manner to the first plane (44) with the first connecting channels (46, 48) and to the second plane (50) with the second connecting channels (52, 54; 52, 54, 55) and, depending on the rotational position of the valve body (40), can be connected to one of the first and/or one of the second connecting channels (46, 48, 52, 54; 46, 48, 52, 54, 55) in a flow-conducting manner essentially without a reduction in cross-section, related to a flow from the respective connecting channel (46, 48, 52, 54; 46, 48, 52, 54, 55) in the direction of the aforementioned pairing (A, B, C, F, G),
**characterized in that**
at least two pairings of housing openings (A to G) and the corresponding sealing openings are arranged one above the other in such a way that one of the aforementioned pairing (D) is assigned to the first plane (44) with the first connecting channels (46, 48) and the other of the aforementioned pairing (E) is assigned to the second plane (50) with the second connecting channels (52, 54; 52, 54, 55) in a flow-conducting manner.

2. A multiway valve (34) according to claim 1,
**characterized in that**
a plurality of the pairings of housing openings (A to G) and the corresponding sealing openings extend over the first and second planes (44, 50) in such a way that these pairings (A, B, C, F, G) are assigned to the first plane (44) with the first connecting channels (46, 48) and to the second plane (50) with the second connecting channels (52, 54; 52, 54, 55) and, depending on the rotational position of the valve body (40), can be connected to one of the first and/or one of the second connecting channels (46, 48, 52, 54; 46, 48, 52, 54, 55) in a flow-conducting manner, essentially without a reduction in cross-section, related to a flow from the respective connecting channel (46, 48, 52, 54; 46, 48, 52, 54, 55) in the direction of the aforementioned pairings (A, B, C, F, G).

3. A multiway valve (34) according to claim 1 or 2,
**characterized in that**
the valve body (40) additionally has at least one third connecting channel (56) for flow-conducting connection of at least two of the housing openings (A to G) that is fluidically separated from the first and second connecting channel (46, 48, 52, 54; 46, 48, 52, 54, 55), with said third connecting channel (56) extending over the first and second planes (44, 50), preferably such that the third connecting channel (56) is designed as a central channel.

4. A multiway valve (34) according to claim 3,
**characterized in that**
the two pairings of housing openings (D, E) arranged above one another and the corresponding sealing openings and the third connecting channel (56) are designed to match one another in such a way that the third connecting channel (56) can be connected to at least one of the two pairings (D, E) in a flow-conducting manner.

5. A multiway valve (34) according to one of claims 1 through 4,
**characterized in that**
the pairings of housing openings (A to G) and the corresponding sealing openings are arranged symmetrically about the axis of rotation (38) of the valve body (40) in such a way that centers of gravity of the aforementioned pairings (A to G) are positioned at 0°, at 60°, at 120°, at 180°, at 240° and at 300°.

6. A multiway valve (34) according to one of claims 1 through 5,
**characterized in that**
an extension of the respective pairing of housing openings (A to G) and the corresponding sealing openings corresponds in each case to an angle of 30° relative to the axis of rotation (38) of the valve body (40).

7. A multiway valve (34) according to one of claims 1 through 6,
**characterized in that**
the first and second connecting channels (46, 48, 52, 54; 46, 48, 52, 54, 55) have extensions that, relative to the axis of rotation (38) of the valve body (40) and a contact surface of the valve body (40) with the seal (42), correspond to the following angle groups a or b: a) 90° in each case; b) in some cases 120°, in some cases 90°, preferably such that the at least one third connecting channel (56) has an extension that, relative to the axis of rotation (38) of the valve body (40) and the contact surface of the valve body (40) with the seal (42), corresponds to an angle of 30°.

8. A multiway valve (34) according to one of claims 1 through 7,
**characterized in that**
the pairings of housing openings (A to G) and the corresponding sealing openings and the valve body (40) with the connecting channels (46, 48, 52, 54, 56; 46, 48, 52, 54, 55, 56) are designed to match one another in such a way that a fluid flowing in through one of the housing openings (A to G) can be split by means of the valve body (40) into at least two other of the housing openings (A to G) depending on the rotational position of the valve body (40).

9. A thermal management system (2) for an electric vehicle, comprising a controller, a battery circuit (6) connected in a heat-transmitting manner to a drive battery (4) of the electric vehicle, a drive circuit (18) connected in a heat-transmitting manner to an electric drive (14) of the electric vehicle and/or to power electronics (16) for an electric drive (14), and an air-conditioning circuit (26) connected in a heat-transmitting manner to a vehicle interior of the electric vehicle, in which the battery circuit (6), the drive circuit (18) and the air-conditioning circuit (26) can each be operated with a coolant and can be connected or disconnected from one another in a coolant-conducting manner by means of at least one controllable coolant valve,
**characterized in that**
the at least one coolant valve is designed as a single multiway valve (34) according to one of claims 1 through 8.

10. A thermal management system (2) according to claim 9,
**characterized in that**
the multiway valve (34) has a total of seven pairings of housing openings (A to G) and the corresponding sealing openings, with the drive circuit (18) being connected in a flow-conducting manner to three of the aforementioned pairings and the battery circuit (6) and the air-conditioning circuit (26) each being connected in a flow-conducting manner to two of the aforementioned pairings.

## Revendications

1. Vanne à voies multiples (34) pour un véhicule électrique comprenant un boîtier (36) avec au moins six ouvertures de boîtier (A à G) permettant chacune d'établir une liaison conductrice d'écoulement avec un canal d'écoulement externe pour un fluide et un corps de soupape (40) disposé dans le boîtier (36) de manière à pouvoir tourner autour d'un axe de rotation (38) pour la liaison conductrice de l'écoulement d'au moins deux des ouvertures de boîtier (A à G) du boîtier (36), dans lequel un joint d'étanchéité (42) avec des ouvertures d'étanchéité correspondant aux ouvertures de boîtier (A à G) dans le boîtier (36) est monté entre le boîtier (36) et le corps de soupape (40) pour assurer l'étanchéité des liaisons conductrices d'écoulement par rapport à l'environnement libre et dans lequel le corps de soupape (40) présente un premier plan (44) doté d'au moins deux premiers canaux de liaison (46, 48) et un deuxième plan (50) parallèle au premier plan (44) doté d'au moins deux deuxièmes canaux de liaison (52, 54 ; 52, 54, 55), les canaux de liaison (46, 48, 52, 54 ; 46, 48, 52, 54, 55) étant séparés les uns des autres du point de vue écoulement et pouvant être reliés de manière conductrice de l'écoulement en tournant le corps de soupape (40) dans une position de rotation prédéfinie du corps de soupape (40) avec chacun au moins deux des ouvertures de boîtier (A à G) du boîtier (36), et dans lequel au moins un appariement des ouvertures de boîtier (A à G) et des ouvertures d'étanchéité correspondantes s'étend sur le premier et le deuxième plan (44, 50) de telle sorte que cet appariement (A, B, C, F, G) du premier plan (44) avec les premiers canaux de liaison (46, 48) et du deuxième plan (50) avec les deuxièmes canaux de liaison (52, 54 ; 52, 54, 55) et, en fonction de la position de rotation du corps de soupape (40), et est relié de manière conductrice de l'écoulement avec l'un des premiers et/ou l'un des deuxièmes canaux de liaison (46, 48, 52, 54 ; 46, 48, 52, 54, 55) sans réduction significative de la section transversale, par rapport à un écoulement depuis le canal de liaison respectif (46, 48, 52, 54 ; 46, 48, 52, 54, 55) en direction de l'appariement précité (A, B, C, F, G)
**caractérisée en ce que**
au moins deux appariements des ouvertures de boîtier (A à G) et des ouvertures d'étanchéité correspondantes sont disposés l'un au-dessus de l'autre de telle sorte que l'un des appariements (D) précités est associé au premier plan (44) avec les premiers canaux de liaison (46, 48) et l'autre appariement (E) précité est associé au deuxième plan (50) avec les deuxièmes canaux de liaison (52, 54; 52, 54, 55) de manière conductrice de l'écoulement.

2. Vanne à voies multiples (34) selon la revendication 1,
**caractérisée en ce que**
plusieurs appariements d'ouvertures de boîtier (A à G) et des ouvertures d'étanchéité correspondantes s'étendent sur le premier et le deuxième plan (44, 50) de telle sorte que ces appariements (A, B, C, F, G) du premier plan (44) avec les premiers canaux de liaison (46, 48) et du deuxième plan (50) avec les deuxièmes canaux de liaison (52, 54 ; 52, 54, 55) conduisent l'écoulement avec l'un des premiers et/ou l'un des deuxièmes canaux de liaison (46, 48, 52, 54 ; 46, 48, 52, 54, 55) en fonction de la position de rotation du corps de soupape (40), sans réduction significative de la section transversale, par rapport à un écoulement depuis le canal de liaison respectif (46, 48, 52, 54 ; 46, 48, 52, 54, 55) en direction des appariements précités (A, B, C, F, G).

3. Vanne à voies multiples (34) selon la revendication 1 ou 2,
**caractérisée en ce que**
le corps de soupape (40) est doté en plus de la liaison conductrice d'écoulement d'au moins deux des ouvertures de boîtier (A à G) d'au moins un troisième canal de liaison (56) séparé des premiers et deuxièmes canaux de liaison (46, 48, 52, 54 ; 46, 48, 52, 54, 55) du point de vue écoulement, le troisième canal de liaison (56) s'étendant sur le premier et le deuxième plan (44, 50), le troisième canal de liaison (56) étant de préférence conçu comme un canal central.

4. Vanne à voies multiples (34) selon la revendication 3,
**caractérisée en ce que**
les deux appariements d'ouvertures de boîtier (D, E) disposés l'un au-dessus de l'autre et les ouvertures d'étanchéité correspondantes et le troisième canal de liaison (56) sont réalisés de manière adaptée l'un à l'autre de telle sorte que le troisième canal de liaison (56) peut être relié au moins l'un des deux appariements (D, E) de manière conductrice de l'écoulement.

5. Vanne à voies multiples (34) selon l'une des revendications 1 à 4,
**caractérisée en ce que**
les appariements des ouvertures de boîtier (A à G) et des ouvertures d'étanchéité correspondantes sont disposés symétriquement autour de l'axe de rotation (38) du corps de soupape (40) de telle sorte que les centres de gravité de surface des appariements (A à G) précités sont positionnés à 0°, 60°, 120°, 180°, 240° et 300°.

6. Vanne à voies multiples (34) selon l'une des revendications 1 à 5,
**caractérisée en ce que**
une extension de l'appariement respectif des ouvertures de boîtier (A à G) et des ouvertures d'étanchéité correspondantes, par rapport à l'axe de rotation (38) du corps de soupape (40), correspond respectivement à un angle de 30°.

7. Vanne à voies multiples (34) selon l'une des revendications 1 à 6,
**caractérisée en ce que**
les premiers et les deuxièmes canaux de liaison (46, 48, 52, 54 ; 46, 48, 52, 54, 55) présentent des extensions qui, par rapport à l'axe de rotation (38) du corps de soupape (40) et à une surface de contact du corps de soupape (40) avec le joint d'étanchéité (42), correspondent aux groupes angulaires a ou b suivants : a) respectivement 90° ; b) partiellement 120°, partiellement 90°, le troisième canal de liaison (56) présentant de préférence une extension qui, par rapport à l'axe de rotation (38) du corps de soupape (40) et à la surface de contact du corps de soupape (40) avec le joint d'étanchéité (42), correspond à un angle de 30°.

8. Vanne à voies multiples (34) selon l'une des revendications 1 à 7,
**caractérisée en ce que**
les appariements des ouvertures de boîtier (A à G) et des ouvertures d'étanchéité correspondantes et du corps de soupape (40) avec les canaux de liaison (46, 48, 52, 54, 56 ; 46, 48, 52, 54, 55, 56) sont réalisés en étant adaptés les uns aux autres de telle sorte qu'un fluide s'écoulant à travers l'une des ouvertures de boîtier (A à G) peut être réparti au moyen du corps de soupape (40) sur au moins deux autres des ouvertures de boîtier (A à G) en fonction de la position de rotation du corps de soupape (40).

9. Système de gestion thermique (2) pour un véhicule électrique comprenant une commande, un circuit de batterie (6) relié par transmission thermique à une batterie d'entraînement (4) du véhicule électrique, un circuit d'entraînement (18) relié par transmission thermique à un entraînement électrique (14) du véhicule électrique et/ou à une électronique de puissance (16) pour un entraînement électrique (14) et un circuit de climatisation (26) relié par transmission thermique à un habitacle du véhicule électrique, dans lequel le circuit de batterie (6), le circuit d'entraînement (18) et le circuit de climatisation (26) peuvent fonctionner chacun avec un fluide de refroidissement et peuvent être reliés ou séparés l'un de l'autre par une conduite de fluide de refroidissement,
**caractérisé en ce que**
au moins une vanne de fluide frigorigène est réalisée sous la forme d'une vanne unique à voies multiples (34) selon l'une des revendications 1 à 8.

10. Système de gestion thermique (2) selon la revendication 9,
**caractérisé en ce que**
la vanne à voies multiples (34) comporte au total sept appariements des ouvertures de boîtier (A à G) et des ouvertures d'étanchéité correspondantes, le circuit d'entraînement (18) étant relié de manière conductrice de l'écoulement à trois des appariements précités et le circuit de batterie (6) et le circuit de climatisation (26) étant reliés chacun à deux des appariements précités.
